# EUROPÄISCHE PATENTSCHRIFT

(11) **EP 3 247 660 B1**
(45) Veröffentlichungstag und Bekanntmachung des Hinweises auf die Patenterteilung: **24.02.2021**
(21) Anmeldenummer: 16700730.1
(22) Anmeldetag: 15.01.2016
(51) Int. Cl.: B65G 59/04, B65G 61/00, B65H 3/08, B65H 3/44, B65G 47/244

(54) **VERFAHREN UND VORRICHTUNG ZUM UMGANG MIT EINZELNEN ZWISCHENLAGEN**
METHOD AND DEVICE FOR HANDLING INDIVIDUAL INTERMEDIATE LAYERS
PROCÉDÉ ET DISPOSITIF DE MANIPULATION DES COUCHES INTERMÉDIAIRES INDIVIDUELLES

(30) Priorität: 19.01.2015 DE 102015200731; 19.01.2015 DE 102015200734; 10.03.2015 DE 102015103481
(43) Veröffentlichungstag der Anmeldung: 29.11.2017
(73) Patentinhaber: Krones Aktiengesellschaft, 93073 Neutraubling (DE)
(72) Erfinder: ZEINER, Peter, 93073 Neutraubling (DE); WESTERMEIER, Christian, 93073 Neutraubling (DE); EHBERGER, Marco, 93073 Neutraubling (DE); OSTERHAMMER, Martin, 93073 Neutraubling (DE); DIENER, Bernhard, 93073 Neutraubling (DE); BEER, Erhard, 93073 Neutraubling (DE); HECKEL, Gerald, 93073 Neutraubling (DE); KOLLMUSS, Manuel, 93073 Neutraubling (DE); SEMMELROCK, Albin, 93073 Neutraubling (DE)
(74) Vertreter: Benninger, Johannes
(86) Internationale Anmeldenummer: PCT/EP2016/050729
(87) Internationale Veröffentlichungsnummer: WO 2016/116362

(56) Entgegenhaltungen:
- EP-A1- 2 644 542
- DE-A1- 4 028 981
- DE-A1- 10 155 596
- DE-A1-102008 054 813
- JP-A- H05 124 751
- JP-A- H11 199 071
- JP-A- 2007 039 113
- US-A- 4 228 886
- US-A- 4 797 169
- US-A- 6 155 775
- US-A1- 2010 232 923

## Beschreibung

Die vorliegende Erfindung betrifft ein Verfahren und eine Vorrichtung zum Umgang mit einzelnen Zwischenlagen.

Aus dem Stand der Technik sind bereits automatisierte Palettiervorrichtungen bekannt, welche mehrere Artikel auf einer Palette anordnen und die Artikel der jeweiligen Palette abschließend mittels Stretchfolie umhüllen.

Bei derartigen Paletten sind vorzugsweise mehrere Lagen an Artikeln auf der jeweiligen Palette übereinander angeordnet, um eine große Anzahl an Artikeln auf der jeweiligen Palette platzieren zu können. Die Artikel können beispielsweise durch Gebinde mit mehreren Getränkebehältnissen ausgebildet sein. Derartige Artikel besitzen häufig eine komplexe Geometrie, so dass eine Stapelung mit mehreren Lagen nicht immer ohne hiermit einhergehende Probleme hinsichtlich der Stabilität der gesamten Palettenzusammenstellung möglich ist. Insbesondere während des Transportes der Palette ist es notwendig, eine gewisse Stabilität für die Palettenzusammenstellung gewährleisten zu können, um ein Kippen der jeweiligen Artikel mit Gewissheit ausschließen zu können.

Um die Stabilität der Palettenzusammenstellung zu erhöhen bzw. um eine ausreichende Stabilität für die Palettenzusammenstellung gewährleisten zu können, ist aus dem Stand der Technik bekannt, für aufeinanderstehende Artikel sog. Zwischenlagen vorzusehen. Derartige Zwischenlagen können sich zumindest näherungsweise über die gesamte Palettenbreite erstrecken, so dass sämtliche Artikel auf einer derartigen Zwischenlage aufstehen. Bekannte Zwischenlagen sind beispielsweise aus Papier, Kartonage, Pappe, Wellpappe oder aus ähnlichen Materialien gebildet. Aufgrund ihrer Steifigkeit wird mittels der Zwischenlagen jeweils eine stabile Aufstandsfläche für übereinander angeordnete Artikellagen bereitgestellt. Auch kann es sein, dass für eine Ebene der Palette mehrere Zwischenlagen bereitgestellt werden bzw. dass eine Ebene der Palette durch mehrere Zwischenlagen gebildet wird, auf welchen die Artikel aufstehen.

Für automatisierte Prozesse der Palettierung ist es notwendig, dass Zwischenlagen schnell und in großer Anzahl zur Verfügung stehen. Bekannt sind daher Zwischenlagenstapel, die eine Vielzahl von derartigen Zwischenlagen umfassen.

Bevor die jeweiligen Zwischenlagen auf der Palette platziert werden, ist es notwendig, einzelne Zwischenlagen vom Stapel abzutrennen bzw. die Zwischenlagen zu vereinzeln. Hierzu sind aus dem Stand der Technik eine Vielzahl von Vorrichtungen bekannt, mittels welcher ein derartiges Abtrennen einzelner Zwischenlagen von einem Stapel erfolgt.

Beispielsweise ist eine solche Vorrichtung aus der DE 37 02 965 A1 bekannt. Mittels der Vorrichtung gemäß DE-Offenlegungsschrift können Packungen auf einer Palette abgesetzt und Zwischenlagen zwischen vertikal aufeinanderfolgenden Ebenen an Packungen eingebracht werden. Hierzu umfasst die Vorrichtung eine Reihe von heb- und senkbaren Saugern, die an einem gemeinsamen, horizontal verschiebbaren Schlitten angeordnet sind. Die horizontale Bewegung des Schlittens wird über einen pneumatischen oder hydraulischen Arbeitszylinder bewirkt. Weiter ist ein Mitnehmerzangenpaar vorgesehen, welches die jeweilige Zwischenlage in Richtung einer Palette weiterbewegt.

Zudem offenbart die DE 10 2004 031 301 A1 eine derartige Vorrichtung. Bei Vorrichtung der DE-Patentanmeldung wird ein Stapel an Zwischenlagen zur Verfügung gestellt und über einen Greifer mit Saugnäpfen aufgenommen. Anschließend wird die Zwischenlage durch den Greifer angehoben und auf der jeweiligen Palette abgesetzt. Nach Absetzen wird der Greifer zurückgefahren, um die nächste Zwischenlage abzuholen.

Die Praxis hat gezeigt, dass einzelne Zwischenlagen des Stapels verrutschen können bzw. insbesondere nach mehreren aufeinanderfolgenden Abnahmen einzelner Zwischenlagen vom Stapel nicht mehr vollständig bündig zueinander ausgerichtet sind. Wird die Zwischenlage sodann auf die Palette aufgesetzt, so kann ihre Position nicht genau mit einer für die jeweilige Zwischenlage vorgesehenen Soll-Position übereinstimmen. Auch kann es sein, dass die Zwischenlage vom Greifer nicht exakt an einer vorgesehen Position entgegengenommen wird, womit ebenso eine nicht exakte Positionierung auf der jeweiligen Palette einhergeht. Paletten, bei welchen die Zwischenlagen nicht exakt positioniert sind, können zu Instabilitäten neigen.

DE102008054813A1 offenbart die Merkmale der Oberbegriffe der Ansprüche 1 und 13.

Eine Aufgabe der vorliegenden Erfindung kann aus diesem Grunde darin gesehen werden, ein Verfahren und eine Vorrichtung zur Verfügung zu stellen, welche zur exakten Positionierung von Zwischenlagen auf zugeordneten Paletten beitragen. Die Vorrichtung soll zudem einen unkomplizierten Aufbau besitzen. Weiter soll das Verfahren einfach umgesetzt werden können.

Die obigen Aufgaben werden durch ein Verfahren und eine Vorrichtung gelöst, welche die Merkmale der Ansprüchen 1 und 13 umfassen. Weitere vorteilhafte Ausgestaltungen werden durch die Unteransprüche beschrieben.

Die Erfindung betrifft ein Verfahren zum Umgang mit einzelnen Zwischenlagen eines Zwischenlagenstapels. Im Rahmen eines ersten Schrittes des erfindungsgemäßen Verfahrens, welcher sinnvollerweise den folgenden Schritten zeitlich vorausgehen kann, wird eine einzelne Zwischenlage bzw. eine zuoberst auf einem Zwischenlagenstapel angeordnete Zwischenlage vom Zwischenlagenstapel abgetrennt. Hierzu kann die einzelne Zwischenlage beispielsweise über eine oder mehrere fahrende Saug- und/oder Greifeinrichtung erfasst werden und zeitlich hierauf folgend durch ein Verfahren der Saug- und/oder Greifeinrichtung vom Zwischenlagenstapel abgezogen werden. Die Saug- und/oder Greifeinrichtung kann vor Abziehen der Zwischenlage zunächst ein Anheben der Zwischenlage vom Zwischenlagenstapel bewirken. Die Saug- und/oder Greifeinrichtung kann hierbei zunächst eine Vorderkante der Zwischenlage anheben, während eine Rückkante in Kontakt mit dem Zwischenlagenstapel verbleibt und erst bei Abziehen der Zwischenlage vom Zwischenlagenstapel ihren Kontakt zum Zwischenlagenstapel verliert. Die Zwischenlage kann hierbei zumindest bereichsweise gebogen bzw. konkav verformt werden. Hierdurch wird die Zwischenlage effektiv vom Zwischenlagenstapel getrennt, ohne dass weitere Zwischenlagen an der vom Zwischenlagenstapel abzutrennenden Zwischenlage haften bleiben.

Im Rahmen eines weiteren Schrittes des erfindungsgemäßen Verfahrens wird die Zwischenlage in einen Erfassungsbereich einer Sensorik bewegt, welche eine in Bewegungsrichtung der Zwischenlage verlaufende Außenkante bzw. eine in Bewegungsrichtung der Zwischenlage verlaufende seitliche Außenkante mittels vorzugsweise optischer Erfassung erkennt bzw. unmittelbar registriert. Die in Bewegungsrichtung der Zwischenlage verlaufende Außenkante kann an die vorherig erwähnte Rückkante und die vorherig erwähnte Vorderkante jeweils anschließen. In besonders bevorzugten Ausführungsformen besitzen die Zwischenlagen gegenüberliegende quadratische Breitseitenflächen, wobei zwei gegenüberliegende Außenkanten sowie die Vorderkante und die Rückkante den Umfangsverlauf ausbilden.

Alternativ oder ergänzend zur optischen Erfassung ist auch denkbar, dass die in Bewegungsrichtung der Zwischenlage verlaufende Außenkante mechanisch und beispielsweise über wenigstens einen Tastsensor erkannt wird. Auch können entsprechende kapazitive Sensoren und/oder Ultraschallsensoren vorgesehen sein, um die in Bewegungsrichtung der Zwischenlage verlaufende Außenkante zu erkennen.

Denkbar ist beispielsweise, dass die Sensorik ein Kamerasystem umfasst, um die in Bewegungsrichtung der Zwischenlage verlaufende Außenkante zu erkennen. Für besonders bevorzugte Ausführungsformen ist jedoch vorstellbar, dass die in Bewegungsrichtung der Zwischenlage verlaufende Außenkante, wie nachfolgend noch detailliert beschrieben, mittels einer Lichtschranke bzw. mittels eines Lasers optisch erfasst wird. Die Erfindung ist jedoch nicht auf derartige Ausführungsformen beschränkt, so dass für den angesprochenen Fachmann weitere Möglichkeiten bestehen, die in Bewegungsrichtung der Zwischenlage verlaufende Außenkante optisch zu erkennen.

Vorstellbar ist beispielsweise, dass die Zwischenlage noch nicht vollständig vom Zwischenlagenstapel abgezogen ist bzw. noch bereichsweise auf dem Zwischenlagenstapel aufliegt und hierbei in den Erfassungsbereich der Sensorik gelangt. Auch kann es sein, dass die Zwischenlage zunächst vollständig vom Zwischenlagenstapel abgezogen wird bzw. keinen Kontakt zum Zwischenlagenstapel mehr besitzt und hierauf folgend in den Erfassungsbereich der Sensorik bewegt wird. Das Abziehen und die Bewegung in den Erfassungsbereich der Sensorik können weiterhin über eine Greif- und/oder Saugeinrichtung erfolgen, welche die Zwischenlage während der Erfassung ihrer Außenkante bewegt und hält. Die Zwischenlage kann demnach auch bei Erfassung ihrer Außenkante bewegt werden bzw. nicht stillstehen.

Zudem ist vorgesehen, dass die Zwischenlage einen Zielort unter Berücksichtigung der Erfassung anfährt, so dass die Zwischenlage den Zielort mit vorbestimmter Position erreicht. Während des Anfahrens kann sich die Zwischenlage zumindest temporär in einem Bereich bewegen, welcher sich zwischen dem Zwischenlagenstapel und dem Zielort befindet. Demnach kann die Zwischenlage nach Erfassung den Zielort mit einer bestimmten Bewegungsrichtung anfahren, welche bestimmte Bewegungsrichtung unter Berücksichtigung der Erfassung über eine Steuerungseinrichtung ggf. vorgegeben wird und bei welcher Bewegungsrichtung ggf. zumindest eine Richtungskomponente vom Zwischenlagenstapel in Richtung des Zielortes weist. Die Zwischenlage kann weiterhin von der Saug- und/oder Greifeinrichtung an den Zielort überführt bzw. via die Saug- und/oder Greifeinrichtung aus dem Erfassungsbereich der Sensorik in Richtung des Zielortes bewegt werden. In besonders bevorzugten Ausführungsformen kann die Zwischenlage, ggf. über die Saug- und/oder Greifeinrichtung, beginnend mit dem Abziehen und bis zur Überführung an den Zielort, kontinuierlich und unterbrechungsfrei bewegt werden.

Durch das erfindungsgemäße Verfahren, bei welchem das Anfahren des Zielortes unter Berücksichtigung der Erfassung erfolgt, entspricht die Position der Zwischenlage am Zielort sehr genau einer gewünschten Soll-Position bzw. stimmt mit einer vorgegebenen Soll-Position zumindest näherungsweise überein. Die Übergabe von Zwischenlagen auf die jeweilige Palette kann hierbei mit hoher Präzision erfolgen, so dass stabile Paletten unter Zuhilfenahme des erfindungsgemäßen Verfahrens bzw. der erfindungsgemäßen Vorrichtung zusammengestellt werden können. Auch können Probleme bei Palettierung, welche beispielsweise aufgrund einer ungenauen Position der Zwischenlage auf der Palette entstehen, mit dem erfindungsgemäßen Verfahren und der erfindungsgemäßen Vorrichtung vermieden werden.

Für diverse Ausführungsformen ist denkbar, dass eine Palette am Zielort angeordnet ist, so dass die Zwischenlage am Zielort direkt auf der Palette abgelegt wird. Das Ablegen der Zwischenlage am Zielort bzw. auf der Palette kann durch die Saug- und/oder Greifeinrichtung erfolgen. In besonders bevorzugten Ausführungsformen wird die Zwischenlage jedoch am Zielort entgegengenommen bzw. durch die Saug- und/oder Greifeinrichtung an weitere Transportmittel übergeben. Beispielsweise kann es sein, dass die Zwischenlage am Zielort durch mindestens ein verfahrbares Klemmelement entgegengenommen und in Richtung eines Übergabeplatzes gezogen wird. Die Saug- und/oder Greifeinrichtung kann ihre Verbindung zur Zwischenlage nach Entgegennahme durch das mindestens eine verfahrbare Klemmelement lösen und hierauf in Richtung des Zwischenlagenstapels zurückbewegt werden.

Vorstellbar ist zudem, dass das mindestens eine verfahrbare Klemmelement horizontal bewegt wird und die Zwischenlage in Richtung eines Übergabeplatzes zieht. Der Übergabeplatz kann eine horizontale Auflage für die Zwischenlage bereitstellen. Im Bereich des Übergabeplatzes kann das mindestens eine verfahbare Klemmelement seine Verbindung zur Zwischenlage lösen. Vom Übergabeplatz kann die Zwischenlage beispielweise durch eine Handhabungseinrichtung aufgenommen und auf der jeweils zugeordneten Palette abgelegt werden. Die Klemmelemente können sodann in Richtung des jeweiligen Zielortes zurückbewegt werden und dort eine weitere Zwischenlage von der Saug- und/oder Greifeinrichtung entgegennehmen. Insbesondere haben sich in der Praxis Ausführungsformen bewährt, bei welchen das mindestens eine Klemmelement linear verfahren wird. Für die Handhabungseinrichtung haben sich insbesondere Ausführungsformen bewährt, welche die Zwischenlage via Unterdruck fixieren und auf der jeweiligen Palette absetzen. Auch sind Handhabungseinrichtungen vorstellbar, welche die Zwischenlage mechanisch und beispielsweise mittel Greiffingern erfassen und hierauf folgend auf der Palette ablegen.

Insbesondere haben sich Ausführungsformen bewährt, bei welchen zeitlich vor Abtrennen der einzelnen Zwischenlage vom Zwischenlagenstapel ihre an die Außenkante anschließende Vorderkante sowie ihre an die Außenkante anschließende Rückkante ausgerichtet werden. Derartige Ausführungsformen tragen weiterhin dazu bei, eine exakte Positionierung von Zwischenlagen auf Paletten zu ermöglichen. Das Ausrichten kann derart erfolgen, dass hierdurch mehrere zuoberst auf dem Zwischenlagenstapel positionierte Zwischenlagen im Wesentlichen bündig zueinander orientiert sind bzw. bündig aufeinanderliegen. Somit kann nach Ausrichten eine Ist-Position der Vorderkante mit einer Soll-Position zumindest näherungsweise übereinstimmen.

In der Praxis haben sich Ausführungsformen bewährt, bei welchen zwei zustellbare Anschläge gegen die Vorder- und Rückkanten mehrerer zuoberst auf dem Zwischenlagenstapel positionierter Zwischenlagen geführt werden, so dass hierdurch die mehreren zuoberst auf dem Zwischenlagenstapel positionierten Zwischenlagen im Wesentlichen bündig zueinander ausgerichtet sind. Die zwei zustellbaren Anschläge können während ihrer Zustellbewegung und während ihres Kontaktes mit den Zwischenlagen parallel zueinander orientiert sein.

Zudem ist erfindungsgemäß vorgesehen, dass die abgetrennte Zwischenlage in den Erfassungsbereich der Sensorik zeitsynchron mit einer ersten Richtungskomponente bewegt wird, die in Richtung des Zielortes weist und mit einer zweiten Richtungskomponente, die lotrecht zur ersten Richtungskomponente orientiert ist. Die Zwischenlage kann demnach schräg und in Richtung weg des Zwischenlagenstapels vom Zwischenlagenstapel abgezogen werden. Der Erfassungsbereich der Sensorik kann demnach in Abzugsrichtung der Zwischenlage versetzt und seitlich des Zwischenlagenstapels positioniert sein.

Weiter kann die in Bewegungsrichtung der Zwischenlage verlaufende Außenkante mittels einer Lichtschranke optisch erfasst werden. Die Lichtschranke kann eine Quelle bzw. einen Sender umfassen, der Strahlung in Richtung eines Empfängers sendet bzw. emittiert. Die Quelle kann als Laser ausgebildet sein. Die Zwischenlage kann über ihre Außenkante in die Strahlung eintreten und hierbei die Strahlung zumindest anteilig unterbrechen. Der Empfänger kann sodann eine mit der Sensorik in Verbindung stehende Steuerungseinrichtung über eine Ist-Position der Außenkante informieren, welche Steuerungseinrichtung die weitere Bewegungsrichtung der Zwischenlage bzw. ggf. der Saug- und/oder Greifeinrichtung in Richtung des Zielortes vorgibt, so dass die Zwischenlage den Zielort mit vorbestimmter Position erreicht.

Zudem ist denkbar, dass zwei oder mehrere Zwischenlagen zumindest näherungsweise zeitsynchron von einem jeweils zugeordneten Zwischenlagenstapel abgetrennt und in einen Erfassungsbereich einer jeweils zugeordneten Sensorik bewegt werden. Die zwei oder mehreren Zwischenlagen können als Halblagen ausgebildet sein bzw. bei nachfolgender Palettierung gemeinsam eine Ebene der Palette zur Stapelung von Artikeln bereitstellen. Die jeweils zugeordnete Sensorik kann ihre jeweilige in Bewegungsrichtung verlaufende Außenkante erfassen. Jede der zwei oder mehreren Zwischenlagen, die zeitsynchron abgetrennt werden, kann daher in den Erfassungsbereich einer eigenen Sensorik bewegt werden. Weiter kann vorgesehen sein, dass die zwei oder mehreren Zwischenlagen einen jeweiligen Zielort unter Berücksichtigung der jeweiligen Erfassung anfahren, so dass die zwei oder mehreren Zwischenlagen den jeweiligen Zielort zumindest näherungsweise zeitsynchron und mit vorbestimmter Position erreichen.

Somit kann es sein, dass von wenigstens zwei separaten Zwischenlagenstapeln jeweils eine einzelne zuoberst auf dem jeweiligen Zwischenlagenstapel angeordnete Zwischenlage abgetrennt wird, die von den wenigstens zwei separaten Zwischenlagenstapeln abgetrennten einzelnen Zwischenlagen in einen Erfassungsbereich einer jeweiligen Sensorik bewegt werden, wobei die jeweilige Sensorik eine in Bewegungsrichtung der jeweiligen Zwischenlage verlaufende Außenkante mittels vorzugsweise optischer Erfassung erkennt und wobei zeitlich hierauf die abgetrennten einzelnen Zwischenlagen einen jeweiligen Zielort unter Berücksichtigung der jeweiligen vorzugsweise optischen Erfassung anfahren, so dass die Zwischenlagen ihren jeweiligen Zielort mit vorbestimmter Position erreichen.

Weiter kann es sein, dass zeitlich vor Abtrennen der einzelnen Zwischenlagen von den wenigstens zwei separaten Zwischenlagenstapeln ihre jeweilige an die Außenkante anschließende Vorderkante und ihre jeweilige an die Außenkante anschließende Rückkante ausgerichtet werden.

Insbesondere können zum Ausrichten mindestens zwei zustellbare Anschläge gegen die Vorder- und Rückkanten mehrerer Zwischenlagen der wenigstens zwei Zwischenlagenstapel geführt werden, wobei ein zur vorderbündigen Ausrichtung von Zwischenlagen vorgesehener Anschlag und ein zur rückbündigen Ausrichtung von Zwischenlagen vorgesehener Anschlag sowohl mehrere Zwischenlagen eines ersten Zwischenlagenstapels als auch mehrerer Zwischenlagen eines zweiten Zwischenlagenstapels bündig zueinander ausrichten.

Die vorbestimmte Position kann für die zwei oder mehreren Zwischenlagen derart gewählt sein, dass die zwei oder mehreren Zwischenlagen am vorbestimmten Zielort einen definierten Abstand bzw. Spalt zueinander aufweisen. Beide Zwischenlagen bzw. Halblagen können sodann an eine den wenigstens zwei Zwischenlagen zugeordnete Palette überführt werden. Der definierte Abstand bzw. der Spalt zwischen den wenigstens zwei Zwischenlagen kann nach Überführung der Zwischenlagen auf die zugeordnete Palette weiterhin ausgebildet sein. Zudem ist für weitere Ausführungsformen vorstellbar, dass kein Abstand bzw. kein Spalt zwischen den zwei oder mehreren Zwischenlagen ausgebildet ist, so dass die zwei oder mehreren Zwischenlagen am Zielort direkt aneinander angrenzen, wobei ihre benachbarten Außenkanten ggf. miteinander in Oberflächenkontakt stehen. In besonders bevorzugten Ausführungsformen kann vorgesehen sein, dass die zwei oder mehreren Zwischenlagen nach Erreichen des jeweiligen Zielortes zwischen ihren direkt benachbarten Außenkanten einen derartigen Abstand ausbilden, welcher Abstand entlang ihrer direkt benachbarten Außenkanten durchgehend konstant ausgebildet ist.

In weiteren Ausführungsformen kann vorgesehen sein, dass die einzelne Zwischenlage mit bestimmtem Betrag einer Wegstrecke zur vorzugsweise optischen Erfassung ihrer in Bewegungsrichtung verlaufenden Außenkante in Richtung einer ersten Sensorik bewegt wird. Hierzu kann die jeweilige Zwischenlage schräg in Richtung weg des Zwischenlagenstapels bewegt werden. Die Bewegung in Richtung der ersten Sensorik kann über eine Saug- und/oder Greifeinrichtung erfolgen und über die vorherig bereits beschriebene Steuerungseinrichtung vorgegeben werden.

Sofern die Zwischenlage die erste Sensorik nicht erreicht bzw. sofern die erste Sensorik die Außenkante der ersten Zwischenlage bzw. die Ist-Position der Zwischenlage nicht erfasst, kann die Zwischenlage nicht mit vorbestimmter Position an den Zielort überführt werden. Um auch bei einer nicht erfolgten Erfassung durch die erste Sensorik eine genau Überführung an den Zielort gewährleisten zu können, kann vorgesehen sein, dass zeitlich hierauf bzw. zeitlich nach Bewegung der Zwischenlage um einen bestimmten Betrag einer Wegstrecke in Richtung der ersten Sensorik das Erfassen überprüft wird. Das Überprüfen kann sinnvollerweise durch eine Steuerungseinrichtung erfolgen. Beispielsweise kann es sein, dass die erste Sensorik kein Signal zur erfassten Außenkante der jeweiligen Zwischenlage an die Steuerungseinrichtung weitergibt. Die Steuerungseinrichtung kann sodann weitere Schritte einleiten und bewegt für den Fall einer nicht erfolgten optischen Erfassung der Außenkante die jeweilige einzelne Zwischenlage in den Erfassungsbereich einer zweiten Sensorik. Diese erkennt sodann die in Bewegungsrichtung verlaufende Außenkante der jeweiligen Zwischenlage mittels vorzugsweise optischer Erfassung und kann Informationen hierzu an die Steuerungseinrichtung übermitteln. Da die Ist-Position der Zwischenlage somit bekannt ist, kann die jeweilige einzelne Zwischenlage zeitlich hierauf den Zielort unter Berücksichtigung der vorzugsweise optischen Erfassung der zweiten Sensorik anfahren, so dass die einzelne Zwischenlage den Zielort mit bestimmter Position erreicht.

In besonders bevorzugten Ausführungsformen kann vorgesehen sein, dass die Bewegung der einzelnen Zwischenlage in Richtung der ersten Sensorik mit einer Richtungskomponente erfolgt und für den Fall einer nicht erfolgten optischen Erfassung der Außenkante die Bewegung in Richtung der zweiten Sensorik mit einer weiteren Richtungskomponente erfolgt, wobei die Richtungskomponente und die weitere Richtungskomponente entgegengesetzt zueinander orientiert sind.

Weiter ist denkbar, dass die erste Sensorik und/oder die zweite Sensorik zur optischen Erfassung einen Laserstrahl emittieren. Der Laserstrahl kann durch einen Sender emittiert werden, dessen Abstrahlrichtung zumindest näherungsweise vertikal und in Richtung nach unten orientiert ist. Die Zwischenlage kann über ihre Außenkante in die Strahlung eintreten und hierbei die Strahlung zumindest anteilig unterbrechen. Ein für den jeweiligen Laserstrahl vorgesehener Empfänger der ersten bzw. der zweiten Sensorik kann sodann eine mit der Sensorik in Verbindung stehende Steuerungseinrichtung über eine Ist-Position der Außenkante informieren, welche Steuerungseinrichtung die weitere Bewegungsrichtung der Zwischenlage bzw. ggf. der Saug- und/oder Greifeinrichtung in Richtung des Zielortes vorgibt, so dass die Zwischenlage den Zielort mit vorbestimmter Position erreicht.

Für weitere Ausführungsformen ist denkbar, dass die jeweilige Zwischenlage zeitlich nach Erkennen ihrer Außenkante schräg zur Richtung des Zielortes verfahren wird, bis ihre Ausrichtung mit ihrer für den Zielort vorbestimmten Position fluchtet. Zeitlich hierauf folgend kann die jeweilige Zwischenlage den Zielort auf direktem Wege anfahren und hierbei ggf. linear bewegt werden.

Vorstellbar ist zudem, dass für den Fall einer vorzugweise optischen Erfassung der Außenkante durch die zweite Sensorik der Zielort angefahren wird und zeitlich hierauf folgend mindestens eine weitere Zwischenlage vom Zwischenlagenstapel abgetrennt wird, welche mindestens eine weitere Zwischenlage ohne Bewegung in Richtung der ersten Sensorik unmittelbar in den Erfassungsbereich der zweiten Sensorik bewegt wird. Die Praxis hat gezeigt, dass häufig mehrere zuoberst auf einem Zwischenlagenstapel angeordnete Zwischenlagen seitlich vom Zwischenlagenstapel überstehen. Da auch diese Zwischenlagen den Erfassungsbereich der ersten Sensorik nicht erreichen würden, haben sich derartige Ausführungsformen bewährt, bei welchen die Zwischenlagen unmittelbar in den Erfassungsbereich der zweiten Sensorik bewegt werden, um das Verfahren zeitoptimiert umsetzen zu können. Nach einer bestimmten Anzahl an Zwischenlagen kann sodann versucht werden, weitere folgende Zwischenlagen wieder in den Erfassungsbereich der ersten Sensorik zu führen.

Die vorliegende Erfindung betrifft darüber hinaus eine Vorrichtung zum Umgang mit einzelnen Zwischenlagen eines Zwischenlagenstapels. Merkmale, welche vorhergehend zu denkbaren Ausführungsformen des Verfahrens beschrieben wurden, können ebenso bei denkbaren Ausführungsformen der erfindungsgemäßen Vorrichtung vorgesehen sein. Weiter können Merkmale, welche nachfolgend zu denkbaren Ausführungsformen der erfindungsgemäßen Vorrichtung beschrieben werden, bei denkbaren Ausführungsformen des erfindungsgemäßen Verfahrens vorgesehen sein.

Die erfindungsgemäße Vorrichtung umfasst mindestens eine verfahrbare Saug- und/oder Greifeinrichtung zum Abtrennen einzelner Zwischenlagen vom Zwischenlagenstapel und Überführen der abgetrennten Zwischenlage an einen Zielort. Die verfahrbare Saug- und/oder Greifeinrichtung kann demnach vom Zwischenlagenstapel bzw. von einem Bereitstellungsplatz für den Zwischenlagenstapel und dem Zielort hin- und her bewegt werden. In besonders bevorzugten Ausführungsformen kann die Saug- und/oder Greifeinrichtung mindestens einen Saugkopf umfassen, mittels welches mindestens einen Saugkopfes die jeweilige Zwischenlage an der Saug- und/oder Greifeinrichtung temporär fixiert werden kann.

Die erfindungsgemäße Vorrichtung umfasst zudem wenigstens eine Sensorik, über welche eine in Bewegungsrichtung der abgetrennten Zwischenlage verlaufende Außenkante mittels vorzugsweise optischer Erfassung erkennbar ist. Die wenigstens eine Sensorik kann in Abzugsrichtung der Zwischenlage versetzt und seitlich des Zwischenlagenstapels positioniert sein.

Weiter umfasst die Vorrichtung eine Steuerungseinrichtung, die mit der wenigstens einen Sensorik und der Saug- und/oder Greifeinrichtung in Verbindung steht. Von der Steuerungseinrichtung kann eine Bewegungsrichtung der mindestens einen fahrenden Saug- und/oder Greifeinrichtung unter Berücksichtigung der Erfassung derart vorgegeben werden, dass die Zwischenlage den Zielort mit vorbestimmter Position bzw. mit vorbestimmter Orientierung erreicht. Durch die erfindungsgemäße Vorrichtung mit wenigstens einer Sensorik, einer Saug- und/oder Greifeinrichtung und ihre Koppelung an die Steuerungseinrichtung kann die jeweilige Zwischenlage den Zielort sehr genau mit einer bestimmten Soll-Position erreichen. Dies ist auch dann möglich, wenn die jeweilige zuoberst auf dem Zwischenlagenstapel befindliche Zwischenlage seitlich vom Zwischenlagenstapel übersteht.

In besonders bevorzugten Ausführungsformen kann zudem vorgesehen sein, dass die wenigstens eine Sensorik eine oder mehrere Lichtschranken umfasst. Insbesondere kann die Lichtschranke wenigstens einen als Laser ausgebildeten Sender umfassen. Eine Richtung, in welcher der Sender bzw. der Laser emittiert, kann in vertikaler Richtung nach unten weisen.

Auch kann vorgesehen sein, dass die Vorrichtung wenigstens zwei Anschläge umfasst, die mittels einer durch die Steuerungseinrichtung initiierten Zustellbewegung zur vorderbündigen Ausrichtung mit mehreren zuoberst auf dem Zwischenlagenstapel angeordneten Zwischenlagen in Kontakt gebracht werden können. Sind mehrere Zwischenlagenstapel vorgesehen, von welchen Zwischenlagen abgetrennt werden sollen, so können die wenigstens zwei Anschläge ggf. mittels einer Zustellbewegung sowohl Zwischenlagen bzw. Halblagen eines ersten Zwischenlagenstapels als auch Zwischenlagen bzw. Halblagen eines zweiten Zwischenlagenstapels zeitsynchron vorderbündig ausrichten.

Auch kann die Vorrichtung wenigstens zwei verfahrbare Saug- und/oder Greifeinrichtungen zum jeweiligen Abtrennen einzelner Zwischenlagen von einem jeweils zugeordneten Zwischenlagenstapel und Überführen der abgetrennten Zwischenlage an einen Zielort umfassen. Die wenigstens zwei verfahrbaren Saug- und/oder Greifeinrichtungen können mit der Steuerungseinrichtung in Verbindung stehen. Bewegungsrichtungen der wenigstens zwei verfahrbaren Saug- und/oder Greifeinrichtung können unabhängig voneinander und unter Berücksichtigung einer jeweiligen vorzugsweise optischen Erfassung der Außenkante ihrer abgetrennten Zwischenlage über die Steuerungseinrichtung derart vorgegeben werden, dass die abgetrennten Zwischenlagen der wenigstens zwei Saug- und/oder Greifeinrichtungen ihren Zielort mit jeweils vorbestimmter Position erreichen.

Insbesondere kann vorgesehen sein, dass die Steuerungseinrichtung eine Bewegung der wenigstens zwei verfahrbaren Saug- und/oder Greifeinrichtungen derart steuern kann, dass die Zwischenlagen ihren jeweiligen Zielort zumindest näherungsweise zeitsynchron erreichen.

Erfindungsgemäß ist vorgesehen, dass die Vorrichtung eine erste Sensorik und eine zweite Sensorik umfasst, über welche jeweils eine in Bewegungsrichtung der abgetrennten Zwischenlage verlaufende Außenkante mittels vorzugsweise optischer Erfassung erkennbar ist. Die Steuerungseinrichtung steht mit der ersten Sensorik und der zweiten Sensorik in Verbindung, wobei von der Steuerungseinrichtung das jeweilige Erfassen der ersten Sensorik überprüfbar ist, so dass die Steuerungseinrichtung im Fall einer nicht erfolgten optischen Erfassung die mindestens eine Saug- und/oder Greifeinrichtung zur Bewegung der abgetrennten Zwischenlage in einen Erfassungsbereich der zweiten Sensorik ansteuern kann.

Weiter kann es sein, dass die erste Sensorik und/oder die zweite Sensorik solcher Ausführungsformen jeweils wenigstens eine Lichtschranke und vorzugsweise wenigstens einen als Laser ausgebildeten Sender umfassen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Ansicht einer Ausführungsform einer erfindungsgemäßen Vorrichtung und verdeutlicht einen ersten Schritt einer Ausführungsform eines erfindungsgemäßen Verfahrens;
Figur 2 zeigt die schematische Ansicht der Ausführungsform einer erfindungsgemäßen Vorrichtung aus Figur 1 und verdeutlicht einen zweiten Schritt einer Ausführungsform eines erfindungsgemäßen Verfahrens;
Figur 3 zeigt die schematische Ansicht der Ausführungsform einer erfindungsgemäßen Vorrichtung aus den Figuren 1 und 2 und verdeutlicht einen dritten Schritt einer Ausführungsform eines erfindungsgemäßen Verfahrens;
Figur 4 zeigt die schematische Ansicht der Ausführungsform einer erfindungsgemäßen Vorrichtung aus den Figuren 1 bis 3 und verdeutlicht einen vierten Schritt einer Ausführungsform eines erfindungsgemäßen Verfahrens;
Figur 5 zeigt die schematische Ansicht der Ausführungsform einer erfindungsgemäßen Vorrichtung aus den Figuren 1 bis 4 und verdeutlicht einen fünften Schritt einer Ausführungsform eines erfindungsgemäßen Verfahrens;
Figur 6 zeigt eine schematische Ansicht einer weiteren Ausführungsform einer erfindungsgemäßen Vorrichtung und verdeutlicht einen ersten Schritt einer weiteren Ausführungsform eines erfindungsgemäßen Verfahrens;
Figur 7 zeigt eine schematische Ansicht der Ausführungsform einer erfindungsgemäßen Vorrichtung aus Figur 6 und verdeutlicht einen weiteren Schritt einer Ausführungsform eines erfindungsgemäßen Verfahrens;
Figur 8 zeigt eine schematische Ansicht der Ausführungsform einer erfindungsgemäßen Vorrichtung aus den Figuren 6 und 7 und verdeutlicht einen weiteren Schritt einer Ausführungsform eines erfindungsgemäßen Verfahrens;
Figur 9 zeigt eine schematische Ansicht der Ausführungsform einer erfindungsgemäßen Vorrichtung aus den Figuren 6 bis 8 und verdeutlicht einen weiteren Schritt einer Ausführungsform eines erfindungsgemäßen Verfahrens;
Figur 10 zeigt eine schematische Ansicht der Ausführungsform einer erfindungsgemäßen Vorrichtung aus den Figuren 6 bis 10 und verdeutlicht einen weiteren Schritt einer Ausführungsform eines erfindungsgemäßen Verfahrens.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

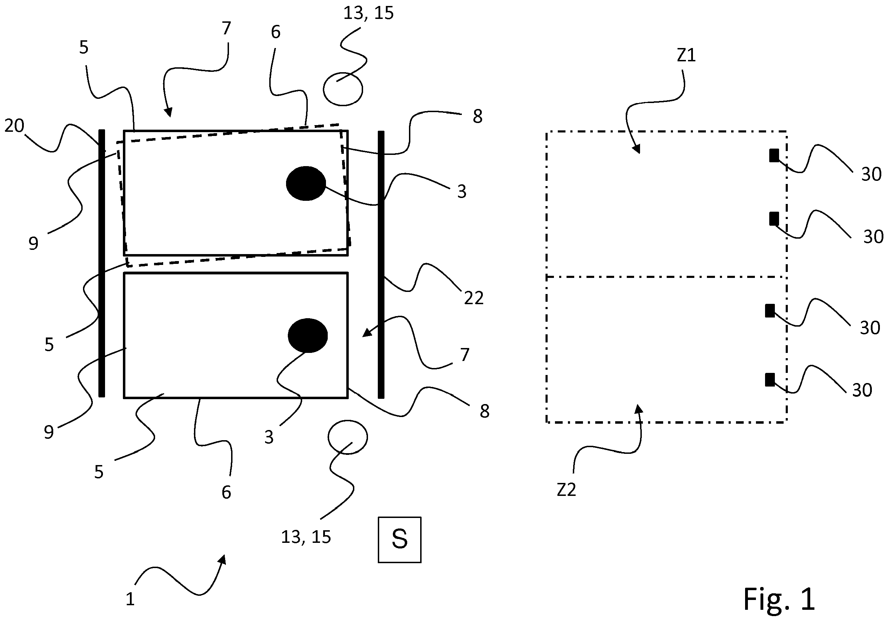

Figur 1 zeigt eine schematische Ansicht einer Ausführungsform einer erfindungsgemäßen Vorrichtung 1 und verdeutlicht einen ersten Schritt einer Ausführungsform eines erfindungsgemäßen Verfahrens. Die Vorrichtung 1 ist vorgesehen zum Umgang mit Zwischenlagen 5. Die Zwischenlagen 5 sind vorliegend als Halblagen ausgebildet und auf zwei benachbarten Zwischenlagenstapeln 7 platziert. Die Zwischenlagen 5 des unteren Zwischenlagenstapels 7 sind bündig zueinander orientiert. Die zuoberst auf dem weiteren Zwischenlagenstapel 7 angeordnete Zwischenlage 5, welche in Figur 1 in Phantomlinien dargestellt ist, besitzt keine bündige Ausrichtung zu den weiteren Zwischenlagen 5 des Zwischenlagenstapels 7, auf welchen sie aufliegt.

Die Vorrichtung 1 umfasst zudem zwei verfahrbare Saug- und/oder Greifeinrichtungen 3, wobei jeder Saug- und/oder Greifeinrichtung 3 ein eigener Zwischenlagenstapel 7 zugeordnet ist, von welcher die jeweilige Saug- und/oder Greifeinrichtung 3 Zwischenlagen 5 abtrennt. Die Saug- und/oder Greifeinrichtungen 3 stehen mit einer Steuerungseinrichtung S in Verbindung, welche die Bewegung der Saug- und/oder Greifeinrichtungen 3 vorgibt. Vorliegend besitzen die Saug- und/oder Greifeinrichtungen 3 jeweils mehrere Saugköpfe, die in den Figuren vorliegender Patentanmeldung nicht zu erkennen sind und mittels welcher die Saug- und/oder Greifeinrichtungen 3 Zwischenlagen 5 fixieren.

Die Saug- und/oder Greifeinrichtungen 3 können verfahren bzw. in Richtung eines jeweiligen Zielortes Z1 bzw. Z2 bewegt werden. So transportiert eine erste der beiden Saug- und/oder Greifeinrichtungen 3 Zwischenlagen 5 von ihrem jeweils zugeordneten Zwischenlagenstapel 7 in Richtung des ersten Zielortes Z1, während die weitere der beiden Saug- und/oder Greifeinrichtungen 3 Zwischenlagen 5 von ihrem jeweils zugeordneten Zwischenlagenstapel 7 in Richtung des weiteren Zielortes Z2 transportiert. Sowohl im Bereich des ersten Zielortes Z1 und im Bereich des zweiten Zielortes Z2 sind Klemmelemente 30 vorgesehen, welche die Zwischenlagen 5 von den Saug- und/oder Greifeinrichtungen 3 entgegennehmen und in Richtung eines in den Figuren vorliegender Patentanmeldung nicht mit dargestellten Übergabeplatzes ziehen, der eine horizontale Auflage für die Zwischenlagen 5 bereitstellt. Von dort werden die Zwischenlagen 5 von einer Handhabungseinrichtung (nicht dargestellt) erfasst und auf einer Palette abgelegt. Zwei Zwischenlagen 5 bzw. beide von den Saug- und/oder Greifeinrichtungen 3 erfassten Zwischenlagen 5 bilden hierbei gemeinsame eine Ebene einer Palette aus, auf welcher Artikel platziert werden können.

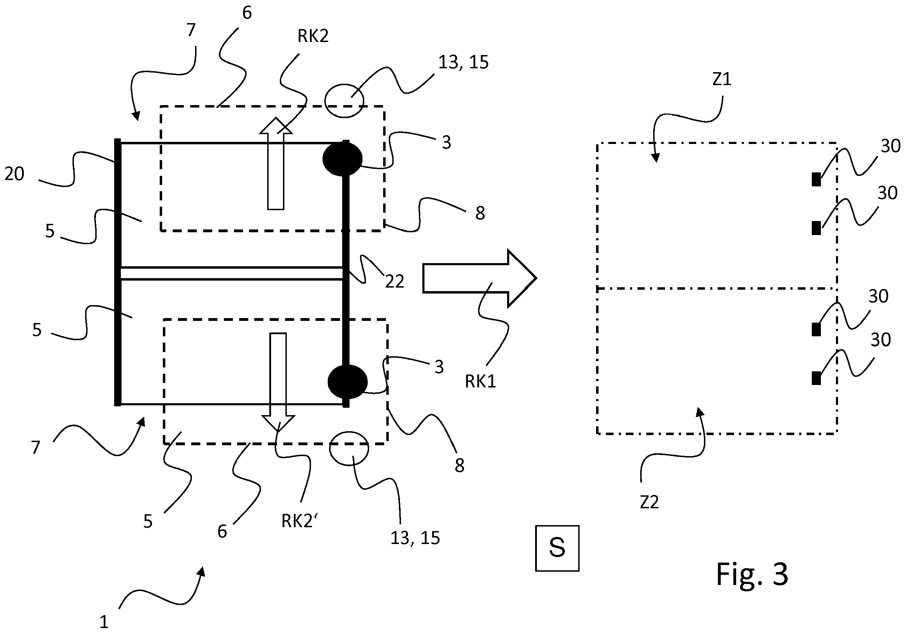

Nach Abziehen der zuoberst auf dem Zwischenlagenstapel 7 angeordneten Zwischenlagen 5 werden diese jeweils in einen Erfassungsbereich einer Sensorik 13 bewegt, welche vorliegend als Lichtschranke 15 ausgebildet ist. Ein Sender der Lichtschranke 15 emittiert einen Laserstrahl in vertikaler Richtung nach unten bzw. vorliegend in Richtung der Bildebene. Die Zwischenlagen 5 werden hierbei derart in Richtung der jeweiligen Sensorik 13 bzw. in Richtung der jeweiligen Lichtschranke 15 geführt, dass sie jeweils via eine ihrer Außenkanten 6, wie in Figur 3 gezeigt und nachfolgend noch beschrieben, in den Erfassungsbereich der Sensorik 13 eintreten und den Laserstrahl unterbrechen. Die Außenkanten 6 der Zwischenlagen 5 schließen an die Vorderkante 8 und an die Rückkante 9 der jeweiligen Zwischenlage 15 an.

Zu erkennen sind weiter zwei Anschläge 20 und 22, die zur vorderbündigen Ausrichtung von Zwischenalgen 5 der Zwischenlagenstapel 7 zugestellt werden können. Eine Bewegung der Anschläge 20 und 22 wird durch die Steuerungseinrichtung S vorgegeben. Die Anschläge 20 und 22 sind parallel zueinander orientiert.

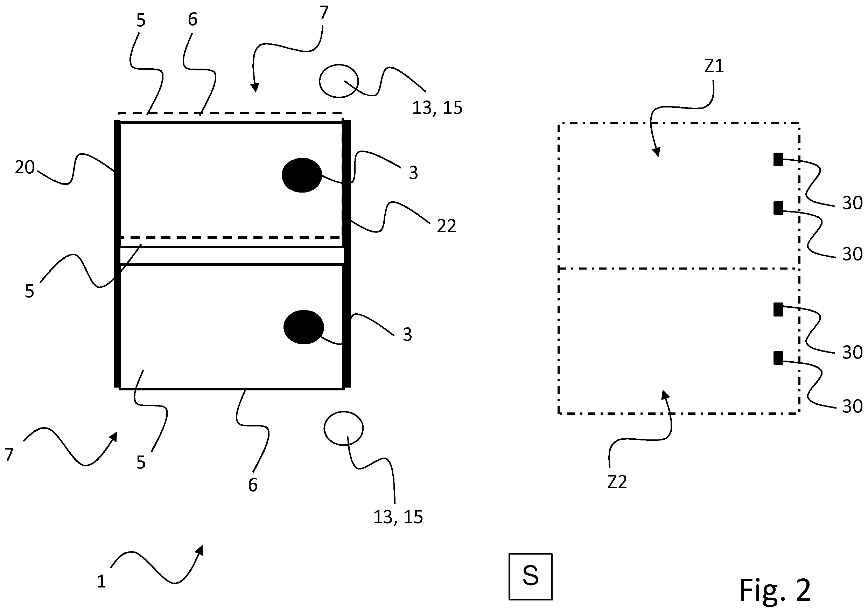

Figur 2 zeigt die schematische Ansicht der Ausführungsform einer erfindungsgemäßen Vorrichtung 1 aus Figur 1 und verdeutlicht einen zweiten Schritt einer Ausführungsform eines erfindungsgemäßen Verfahrens. Wie eine Zusammenschau der Figuren 1 und 2 erkennen lässt, haben die Anschläge 20 und 22 eine Zustellbewegung ausgeführt bzw. sich aufeinander zu bewegt und stehen mit den Vorderkanten 8 und Rückkanten 9 (vgl. Figur 1) mehrerer zuoberst auf den Zwischenlagenstapeln 7 angeordneter Zwischenlagen 5 in Kontakt.

Die Vorderkanten 8 und Rückkanten 9 (vgl. Figur 1) von Zwischenlagen 5 des jeweiligen Zwischenlagenstapels 7 sind somit bündig zueinander ausgerichtet. Während die in Phantomlinien dargestellte Zwischenlage 5 mit ihrer Außenkante 6 vom Zwischenlagenstapel 7 seitlich übersteht, liegt die oberste Zwischenlage 5 des weiteren Zwischenlagenstapels 7 mit ihrer Außenkante 6 bündig auf ihrem Zwischenlagenstapel 7 auf. Die Zwischenlagen 5 wurden zeitlich nach Zustellbewegung der Anschläge 20 und 22 von den Saug- und/oder Greifeinrichtungen 3 erfasst und sind im Verfahrensschritt gemäß Figur 2 nun an den Saug- und/oder Greifeinrichtungen 3 fixiert. Die Saug- und/oder Greifeinrichtungen 3 besitzen hierzu in den Figuren vorliegender Patentanmeldung nicht mit dargestellte Saugköpfe, mittels welcher die Zwischenlagen 5 mit Unterdruck beaufschlagt werden und welche die Zwischenlagen 5 temporär an den Saug- und/oder Greifeinrichtungen 3 festsetzen.

Figur 3 zeigt die schematische Ansicht der Ausführungsform einer erfindungsgemäßen Vorrichtung 1 aus den Figuren 1 und 2 und verdeutlicht einen dritten Schritt einer Ausführungsform eines erfindungsgemäßen Verfahrens. Der dritte Schritt gemäß Figur 3 folgt zeitlich auf den zweiten Schritt gemäß Figur 2. Die Saug- und/oder Greifeinrichtungen 3 werden nun in Richtung ihrer jeweils zugeordneten Sensorik 13 bzw. in Richtung ihrer jeweils zugeordneten Lichtschranke 15 bewegt. Hierzu bewegen sich die Saug- und/oder Greifeinrichtungen 3 jeweils zeitsynchron mit einer ersten Richtungskomponente RK1, die in Richtung des jeweiligen Zielortes Z1 bzw. Z2 weist und mit einer zweiten Richtungskomponente RK2 bzw. RK2', die lotrecht zur ersten Richtungskomponente RK2 orientiert ist. Hierdurch bewegen sich beide Saug- und/oder Greifeinrichtungen 3 schräg von ihrem jeweils zugeordneten Zwischenlagenstapel 7 weg und in Richtung der jeweiligen Sensorik 13 bzw. Lichtschranke 15. Aufgrund der entgegengesetzten Orientierung der zweiten Richtungskomponenten RK2 und RK2' wird der Abstand zwischen den Saug- und/oder Greifeinrichtungen 3 bei Bewegung der Zwischenlagen 5 in Richtung der jeweiligen Sensorik 13 vergrößert.

Die Zwischenlagen 5 treten zunächst mit ihrer Außenkante 6 in einen Erfassungsbereich der jeweiligen Sensorik 13 bzw. Lichtschranke 15 ein bzw. unterbrechen zunächst mittels ihrer Außenkanten 6 einen durch die Sensorik 13 emittierten Laserstrahl. Da die Sensorik 13 mit der Steuerungseinrichtung S in Verbindung steht, kann die Steuerungseinrichtung S unter Zuhilfenahme der von der jeweiligen Sensorik 13 übermittelten Informationen Rückschlüsse zur relativen Position der an der jeweiligen Saug- und/oder Greifeinrichtung 3 fixierten Zwischenlage 5 ziehen. Hierauf kann die Steuerungseinrichtung S die Saug- und/oder Greifeinrichtungen 3 mit bestimmter Bewegungsrichtung steuern, so dass die Zwischenlagen 5 ihren jeweiligen Zielort Z1 bzw. Z2 mit vorbestimmter Position erreichen.

Figur 3 lässt darüber hinaus erkennen, dass die Anschläge 20 und 22 während eines Abziehens der Zwischenlagen 5 von ihrem jeweiligen Zwischenlagenstapel 7 weiterhin zugestellt sind. Die Zwischenlagen 5 können somit während ihres Abziehens gleitend über einen Anschlag 22 hinwegbewegt werden, was ein Trennen der jeweiligen Zwischenlage 5 von ihrem Zwischenlagenstapel 7 erleichtert. Zudem wird hierdurch das Risiko einer Deorientierung weiterer Zwischenlagen 5 des Zwischenlagenstapels 7 vermindert.

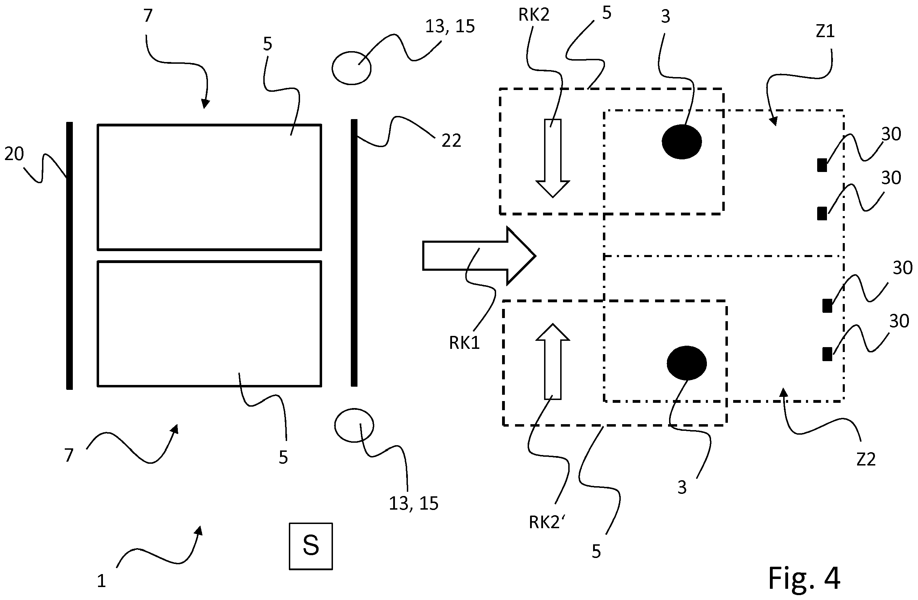

Figur 4 zeigt die schematische Ansicht der Ausführungsform einer erfindungsgemäßen Vorrichtung 1 aus den Figuren 1 bis 3 und verdeutlicht einen vierten Schritt einer Ausführungsform eines erfindungsgemäßen Verfahrens. Die Steuerungseinrichtung S gibt, wie vorhergehend bereits erwähnt, die Bewegungen der Saug- und/oder Greifeinrichtungen 3 derart vor, dass die Zwischenlagen 5 ihren jeweiligen vorbestimmten Zielort Z1 bzw. Z2 mit vorbestimmter Position erreichen. Die Richtungskomponenten RK2 und RK2' weisen aufeinander zu, so dass die beiden Zwischenlagen 5 sich einander nähern. Die Richtungskomponente RK1 der Bewegung ist weiterhin für beide Zwischenlagen 5 bzw. für beide Saug- und/oder Greifeinrichtungen 3 ausgebildet, so dass sich die Zwischenlagen 5 in Richtung ihres jeweiligen Zielortes Z1 bzw. Z2 bewegen. Die Klemmelemente 30 verweilen in ihrer Position und warten auf das Eintreffen der Zwischenlagen 5 an ihrem jeweiligen Zielort Z1 bzw. Z2.

Die beiden Anschläge 20 und 22 haben sich voneinander entfernt und können zeitlich vor Entgegennahme einer weiteren Zwischenlage 5 von den Zwischenlagenstapeln 7 die Zwischenlagen 5 der Zwischenlagenstapel 7 erneut vorderbündig ausrichten.

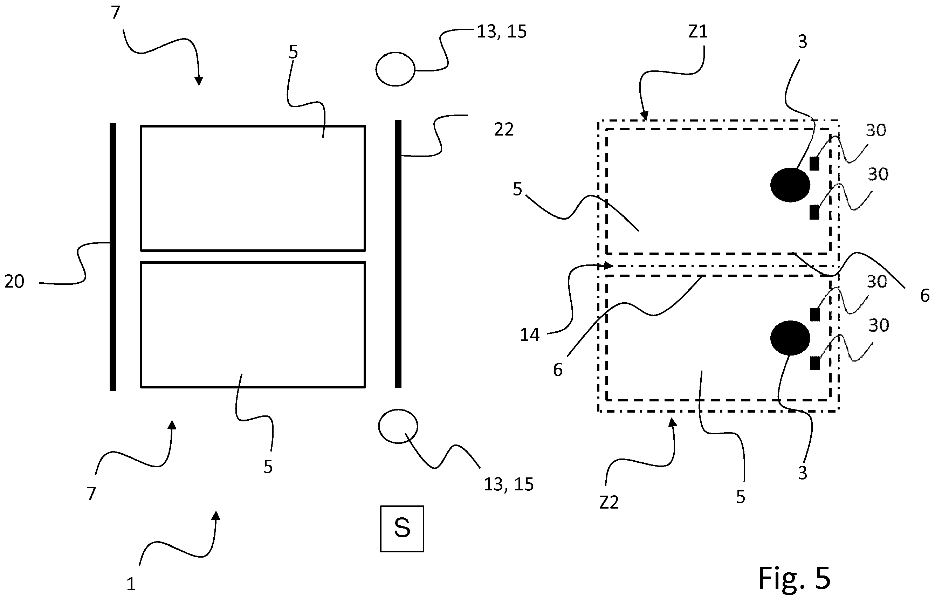

Figur 5 zeigt die schematische Ansicht der Ausführungsform einer erfindungsgemäßen Vorrichtung 1 aus den Figuren 1 bis 4 und verdeutlicht einen vierten Schritt einer Ausführungsform eines erfindungsgemäßen Verfahrens. Hierbei haben die Zwischenlagen 5 nun ihren jeweiligen Zielort Z1 bzw. Z2 mit vorbestimmter Position erreicht. Da die Bewegungsbahn der Saug- und/oder Greifeinrichtungen 3 in Richtung des jeweiligen Zielortes Z1 bzw. Z2 unter Berücksichtigung der optischen Erfassung der Außenkante 6 der jeweiligen Zwischenlage 5 über die Steuerungseinrichtung S vorgegeben wird, können die Zwischenlagen 5 den jeweiligen Zielort Z1 bzw. Z2 sehr genau mit bestimmter Position erreichen.

Sind die Zwischenlagen 5, wie in Figur 5 gezeigt, an ihrem jeweiligen Zielort Z1 bzw. Z2 angelangt, so werden diese von den Klemmelementen 30 entgegengenommen und in Richtung eines Übergabeplatzes, welcher in den Figuren vorliegender Patentanmeldung nicht mit dargestellt ist, gezogen. Die Verbindung zwischen den Saug- und/oder Greifeinrichtung 3 und den Zwischenlagen 5 kann nach Entgegennahme der Zwischenlagen 5 durch die Klemmelemente 30 gelöst werden. Die Saug- und/oder Greifeinrichtung 3 werden hierauf folgend auf direktem Wege in Richtung der Zwischenlagenstapel 7 zurückbewegt, um von dort eine weitere Zwischenlage 5 entgegenzunehmen und zunächst in Richtung der Sensorik 13 bzw. der Lichtschranke 15, wie unter Zusammenschau der Figuren 1 bis 3 verdeutlich, zu bewegen.

Darüber hinaus zeigt Figur 5 einen Spalt bzw. Abstand 14, welcher zwischen den einzelnen Zwischenlagen 5 am Zielort Z1 bzw. Z2 ausgebildet ist. Da mittels des Verfahrens bzw. mittels der Vorrichtung 1 Zwischenlagen 5 sehr präzise bzw. mit vorgegebener Soll-Position an ihren Zielort Z1 bzw. Z2 überführt werden, kann eine gewünschte Dimensionierung des Spaltes bzw. Abstandes 14 sehr genau eingehalten werden. Über den Verlauf von benachbarten Außenkanten 6 der in den Zielorten Z1 und Z2 befindlichen Zwischenlagen 5 ist der Abstand 14 konstant ausgebildet. In weiteren denkbaren Ausführungsformen kann auch vorgesehen sein, dass kein Spalt bzw. Abstand 14 ausgebildet ist und die Zwischenlagen 15 im Zielort Z1 bzw. Z2 direkt aneinander angrenzen und ggf. miteinander in Kontakt stehen.

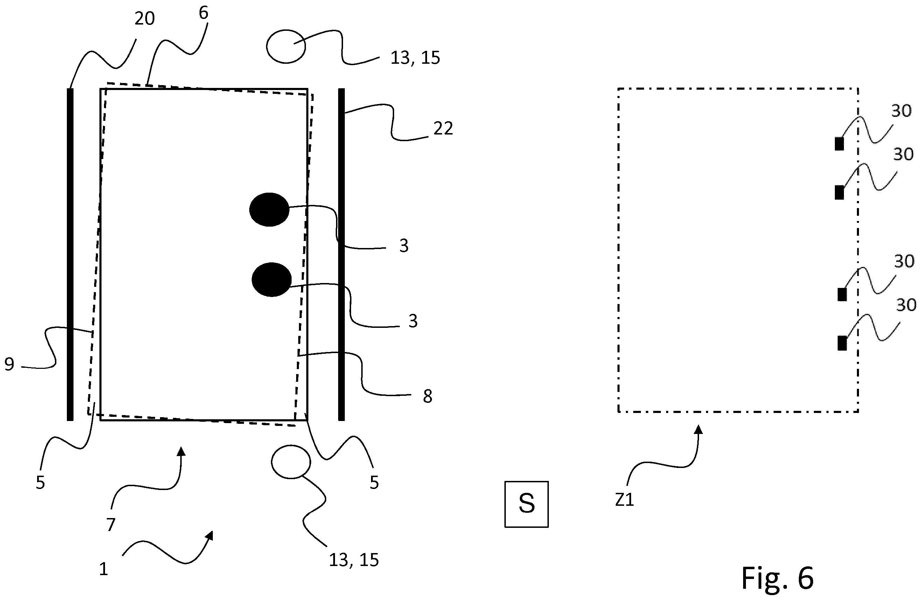

Figur 6 zeigt eine schematische Ansicht einer weiteren Ausführungsform einer erfindungsgemäßen Vorrichtung 1 und verdeutlicht einen ersten Schritt einer weiteren Ausführungsform eines erfindungsgemäßen Verfahrens. Auch die Vorrichtung 1 gemäß Ausführungsbeispiel aus Figur 6 ist vorgesehen zum Umgang bzw. zum Separieren einzelner Zwischenlagen 5. Gegensätzlich zum vorhergehenden Ausführungsbeispiel aus den Figuren 1 bis 5 ist vorliegend lediglich ein Zwischenlagenstapel 7 anstelle zweier Zwischenlagenstapel 7 vorgesehen, von welchem Zwischenlagenstapel 7 Zwischenlagen 5 abgetrennt werden sollen. Die Zwischenlagen 5 des Zwischenlagenstapels 7 besitzen eine entsprechende Dimensionierung, um jeweils alleine eine vollständige Auflageebene für Artikel einer Palette bereitzustellen.

Zu erkennen ist weiterhin, dass die zuoberst auf dem Zwischenlagenstapel 7 angeordnete Zwischenlage 5, welche in Figur 6 in Phantomlinien dargestellt ist, keine bündige Ausrichtung zu den weiteren Zwischenlagen 5 des Zwischenlagenstapels 7 besitzt, auf welchen sie aufliegt. Um eine vorderbündige Ausrichtung der in Phantomlinien dargestellten Zwischenlage 5 zu erreichen, sind ebenso wie beim Ausführungsbeispiel aus den Figuren 1 bis 5 zwei auf gegenüberliegenden Seiten des Zwischenlagenstapels 7 positionierte Anschläge 20 und 22 vorgesehen, die zugestellt werden können.

Im Ausführungsbeispiel aus Figur 6 wird die zuoberst auf dem Zwischenlagenstapel 7 positionierte Zwischenlage 5 über zwei Saug- und/oder Greifeinrichtungen 3 entgegengenommen und in Richtung des Zielortes Z1 bewegt. Die beiden Saug- und/oder Greifeinrichtungen 3 können jeweils mindestens einen Saugkopf besitzen, mittels welches jeweiligen mindestens einen Saugkopfes die Zwischenlage 5 an den Saug- und/oder Greifeinrichtungen 3 temporär via Unterdruck fixiert werden kann. Eine Bewegung der Saug- und/oder Greifeinrichtungen 3 erfolgt vorliegend gemeinsam bzw. zeitsynchron.

Weiter sind die Saug- und/oder Greifeinrichtungen 3 an eine Steuerungseinrichtung S gekoppelt. Die Steuerungseinrichtung S kann eine Bewegung bzw. eine jeweilige Bewegungsbahn, welcher die Saug- und/oder Greifeinrichtungen 3 in Richtung des Zielortes Z1 folgen, vorgeben.

Auch sind Klemmelemente 30 zu erkennen, welche die Zwischenlage 5 am Zielort Z1 greifen können und in Richtung eines in den Figuren vorliegender Patentanmeldung nicht dargestellten Übergabeplatzes transportieren. Von dort können Zwischenlagen 5 via eine Handhabungseinrichtung (nicht dargestellt) aufgenommen und auf einer Palette abgelegt werden.

In Figur 6 stehen die Saug- und/oder Greifeinrichtungen 3 noch nicht in Kontakt mit der Zwischenlage 5. Beide Saug- und/oder Greifeinrichtungen 3 sind bereits oberhalb der Zwischenlage 5 positioniert.

Bezugsziffer 13 verweist weiterhin auf jeweils eine Sensorik, die als Lichtschranken 15 ausgebildet sind. Für die Ausführungsform gemäß Figur 6 genügt eine Sensorik 13 bzw. eine Lichtschranke 15, um die Zwischenlage 5 mit vorbestimmter Position an den Zielort Z1 überführen zu können. Die weitere Sensorik 13 bzw. Lichtschranke 15 wird bereitgehalten, sofern mittels der Vorrichtung 1 zeitsynchron zwei Zwischenlagen 5 bzw. zwei Halblagen gemäß Figuren 1 bis 5 vom jeweiligen Zwischenlagenstapel 7 separiert werden sollen. Die Vorrichtung 1 aus den Figuren 6 bis 10 kann daher umgerüstet werden, so dass ihr Aufbau der Vorrichtung 1 aus den Figuren 1 bis 5 entspricht.

Nach Abziehen der zuoberst auf dem Zwischenlagenstapel 7 angeordneten Zwischenlage 5 wird diese über ihre Außenkante 6 in den Erfassungsbereich einer Sensorik 13 bzw. Lichtschranke 15 bewegt. Die Außenkante 6 schließt an die Vorderkante 8 und an die Rückkante 9 der jeweiligen Zwischenlage 5 an.

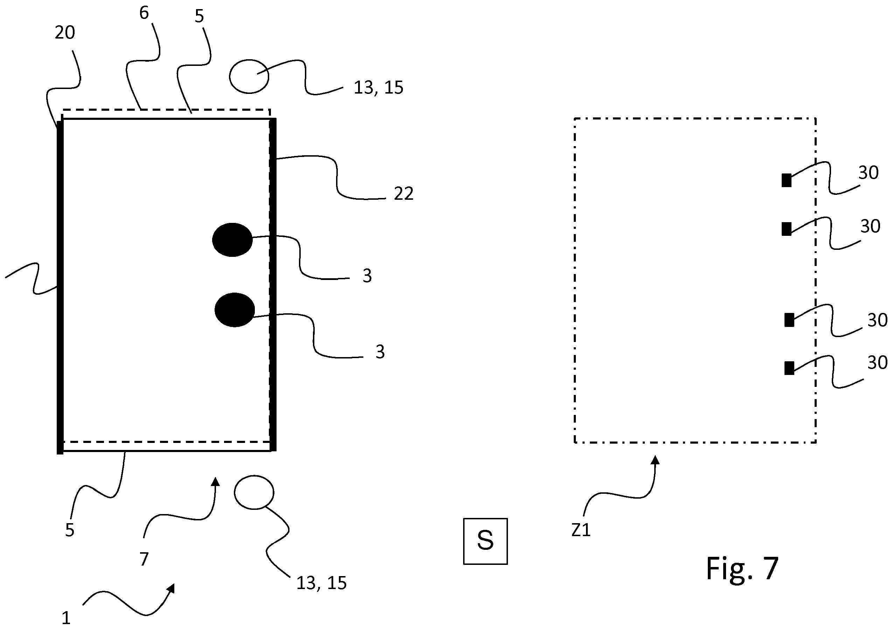

Figur 7 zeigt eine schematische Ansicht der Ausführungsform einer erfindungsgemäßen Vorrichtung 1 aus Figur 6 und verdeutlicht einen weiteren Schritt einer Ausführungsform eines erfindungsgemäßen Verfahrens. Der Schritt aus Figur 7 folgt zeitlich auf den Verfahrensschritt aus Figur 6.

Die Anschläge 20 und 22 haben sich einander angenähert und hierbei eine Zustellbewegung ausgeführt, bei welcher die oberste auf dem Zwischenlagenstapel 7 angeordnete Zwischenlage 5 vorderbündig zu weiteren Zwischenlagen 5 des Zwischenlagenstapels 7 ausgerichtet wurde. Die Anschläge 20 und 22 sind parallel zueinander orientiert. Zur bündigen Ausrichtung der zuoberst auf dem Zwischenlagenstapel 7 angeordneten Zwischenlage 5 tritt der Anschlag 20 mit der Rückkante 9 der Zwischenlage 5 in Kontakt, während der Anschlag 22 mit der Vorderkante 8 (vgl. Figur 6) der Zwischenlage 5 in Kontakt gebracht wird.

Die zuoberst auf dem Zwischenlagenstapel 7 angeordnete Zwischenlage 5 wird erst nach vorderbündiger Ausrichtung durch die Anschläge 20 und 22 mittels der Saug- und/oder Greifeinrichtungen 3 fixiert. Nach vorderbündiger Ausrichtung kann die zuoberst auf dem Zwischenlagenstapel 7 angeordnete Zwischenlage 5 seitlich vom Zwischenlagenstapel 7 überstehen. Da ein seitliches Überstehen bei einigen der Zwischenlagen 5 des Zwischenlagenstapels 7 auftreten kann, wäre die direkte Überführung der Zwischenlage 5 an den Zielort Z1 mit einer ungenauen Position am Zielort Z1 einhergehend, welcher ggf. nicht mit einer gewünschten Soll-Position übereinstimmt. Durch das erfindungsgemäße Verfahren und die erfindungsgemäße Vorrichtung 1 wird eine exakte Überführung von Zwischenlagen 5 in Richtung des Zielortes auch bei teilweisem Überstand einzelner Zwischenlagen 5 vom Zwischenlagenstapel 7 ermöglicht, so dass die Ist-Position von Zwischenlagen 5 am Zielort Z1 einer vorgegebenen Soll-Position entspricht.

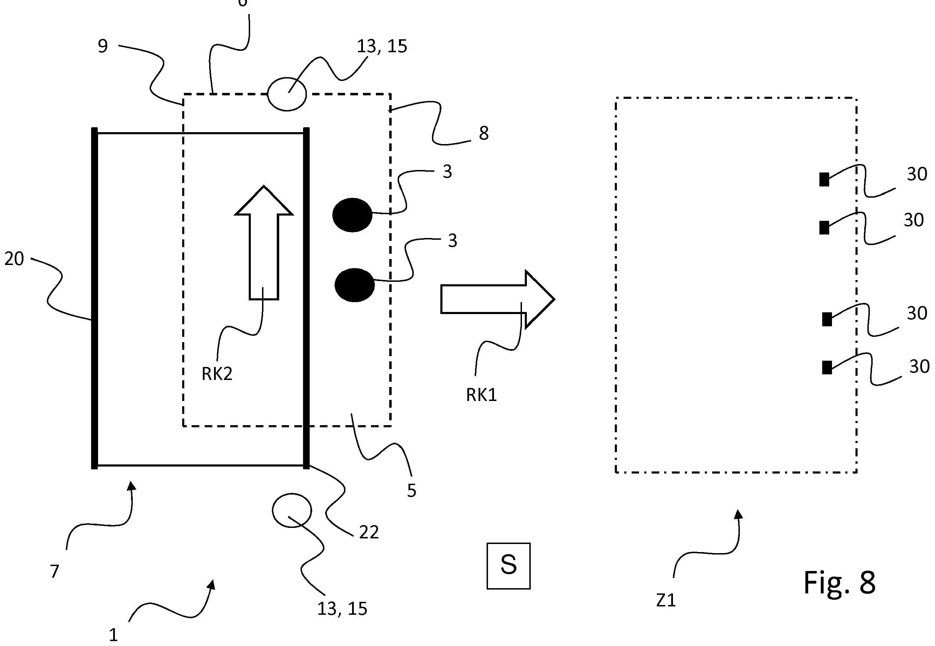

Figur 8 zeigt eine schematische Ansicht der Ausführungsform einer erfindungsgemäßen Vorrichtung 1 aus den Figuren 6 und 7 und verdeutlicht einen weiteren Schritt einer Ausführungsform eines erfindungsgemäßen Verfahrens. Der Verfahrensschritt aus Figur 8 folgt zeitliche auf den Verfahrensschritt aus Figur 7. Insbesondere wird in Figur 8 eine Bewegung der zuoberst auf dem Zwischenlagenstapel 7 angeordneten Zwischenlage 5 in Richtung der Sensorik 13 bzw. in Richtung der Lichtschranke 15 gezeigt. Die Zwischenlage 5 wird zeitgleich mit einer ersten Richtungskomponente RK1 bewegt, die in Richtung des Zielortes Z1 weist und mit einer zweiten Richtungskomponente RK2, die lotrecht zur ersten Richtungskomponente RK1 orientiert ist. Die Zwischenlage 5 wird daher schräg vom Zwischenlagenstapel 7 weggeführt und tritt hierbei in den Erfassungsbereich der Sensorik 13 bzw. der Lichtschranke 15 ein. Während des Eintritts der Außenkante 6 in den Erfassungsbereich der Sensorik 13 bzw. der Lichtschranke 15 liegt die Zwischenlage 5 mit ihrer Rückkante 9 auf dem Zwischenlagenstapel 7 auf bzw. steht mit ihrer Rückkante 9 weiterhin mit dem Zwischenlagenstapel 7 in Kontakt.

Die Sensorik 13 bzw. die Lichtschranke 15 übermittelt hierauf Informationen an die Steuerungseinrichtung S, die unter Berücksichtigung der Informationen Aussagen zur Position der Zwischenlage 5 an den Saug- und/oder Greifeinrichtungen 3 treffen kann und hierauf die Saug- und/oder Greifeinrichtungen 3 derart steuert, dass die Zwischenlage 5 den Zielort Z1 mit bestimmter Position erreicht.

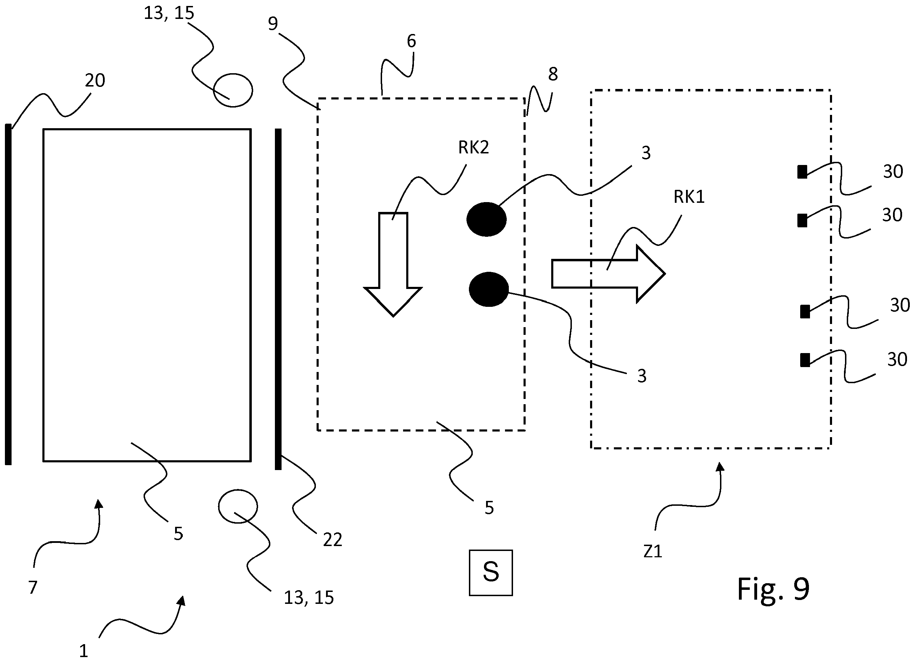

Figur 9 zeigt eine schematische Ansicht der Ausführungsform einer erfindungsgemäßen Vorrichtung 1 aus den Figuren 6 bis 8 und verdeutlicht einen weiteren Schritt einer Ausführungsform eines erfindungsgemäßen Verfahrens. Die Zwischenlage 5 wird nun nach optischer Erfassung ihrer Außenkante 6 von der Saug- und/oder Greifeinrichtungen 3 in Richtung des Zielortes Z1 weitergeführt. Die Bewegung der Saug- und/oder Greifeinrichtungen 3 wird durch die Steuerungseinrichtung S unter Berücksichtigung der optischen Erfassung vorgegeben. Die Richtungskomponente RK2 ist nun gegenüber dem Verfahrensschritt aus Figur 8 in entgegengesetzter Richtung orientiert. Die Anschläge 20 und 22 wurden auseinandergeführt und können vor Entgegennahme einer weiteren zuoberst auf dem Zwischenlagenstapel 7 angeordneten Zwischenlage 5 erneut zugestellt werden, um die weitere Zwischenlage 5 vorderbündig auszurichten. Die Klemmelemente 30 sind gegenüber ihrer Position aus Figur 8 unverändert und warten auf das Eintreffen der Zwischenlage 5 am Zielort Z1, um diese von den Saug- und/oder Greifeinrichtungen 3 entgegenzunehmen.

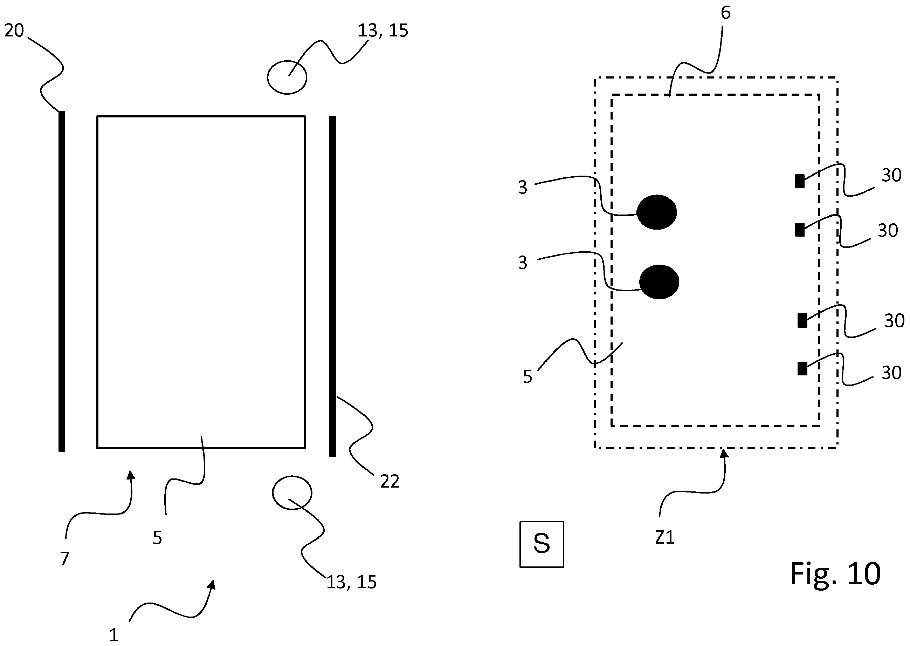

Figur 10 zeigt eine schematische Ansicht der Ausführungsform einer erfindungsgemäßen Vorrichtung 1 aus den Figuren 6 bis 9 und verdeutlicht einen weiteren Schritt einer Ausführungsform eines erfindungsgemäßen Verfahrens. Die Zwischenlage 5 hat nun ihren Zielort Z1 mit vorbestimmter Position erreicht. Die Ist-Position der Zwischenlage 5 am Zielort entspricht einer vorgegebenen Soll-Position. Ausgehend von der Position aus Figur 10 können nun die Saug- und/oder Greifeinrichtungen 3 die Zwischenlage 5 freigeben, wobei die Klemmelemente 30 die Zwischenlage 5 übernehmen und in Richtung eines in den Figuren vorliegender Patentanmeldung nicht mit dargestellten Übergabeplatzes ziehen, der eine horizontale Auflage für die Zwischenlagen 5 bereitstellt. Die Saug- und/oder Greifeinrichtungen 3 können sodann in Richtung des Zwischenlagenstapels 7 zurückbewegt werden und dort eine weitere Zwischenlage 5 entgegennehmen und vom Zwischenlagenstapel 7 abziehen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 3: Saug- und/oder Greifeinrichtung
- 5: Zwischenlage
- 6: Außenkante
- 7: Zwischenlagenstapel
- 8: Vorderkante
- 9: Rückkante
- 13: Sensorik
- 14: Abstand
- 15: Lichtschranke
- 20: Anschlag
- 22: Anschlag
- 30: Klemmelemente

- RK1: Erste Richtungskomponente
- RK2: Zweite Richtungskomponente
- S: Steuerungseinrichtung
- Z1: Zielort
- Z2: Zielort

## Patentansprüche

1. Verfahren zum Umgang mit einzelnen Zwischenlagen (5) eines Zwischenlagenstapels (7), umfassend folgende Schritte:
- Abtrennen einer einzelnen Zwischenlage (5) vom Zwischenlagenstapel (7),
- Bewegen der Zwischenlage (5) in einen Erfassungsbereich einer Sensorik (13), welche eine in Bewegungsrichtung der Zwischenlage (5) verlaufende Außenkante (6) mittels vorzugsweise optischer Erfassung erkennt,
- Anfahren eines Zielortes (Z1, Z2) unter Berücksichtigung der vorzugsweise optischen Erfassung, so dass die Zwischenlage (5) den Zielort (Z1, Z2) mit vorbestimmter Position erreicht, wobei das Verfahren **dadurch gekennzeichnet ist, dass**
die abgetrennte Zwischenlage (5) in den Erfassungsbereich der Sensorik (13) zeitsynchron mit einer ersten Richtungskomponente (RK1) bewegt wird, die in Richtung des Zielortes (Z1, Z2) weist und mit einer zweiten Richtungskomponente (RK2), die lotrecht zur ersten Richtungskomponente (RK1) orientiert ist.

2. Verfahren nach Anspruch 1, bei welchem zeitlich vor Abtrennen der einzelnen Zwischenlage (5) vom Zwischenlagenstapel (7) ihre an die Außenkante (6) anschließende Vorderkante (8) und ihre an die Außenkante (6) anschließende Rückkante (9) ausgerichtet werden, wobei vorzugsweise zum Ausrichten zwei zustellbare Anschläge (20, 22) gegen die Vorder- und Rückkanten (8, 9) mehrerer zuoberst auf dem Zwischenlagenstapel (7) positionierter Zwischenlagen (5) geführt werden, so dass hierdurch die mehreren zuoberst auf dem Zwischenlagenstapel (7) positionierten Zwischenlagen (5) im Wesentlichen bündig zueinander ausgerichtet sind.

3. Verfahren nach Anspruch 1 oder Anspruch 2, bei welchem die in Bewegungsrichtung der Zwischenlage (5) verlaufende Außenkante (6) mittels einer Lichtschranke (15) optisch erfasst wird, welche Lichtschranke (15) zur optischen Erfassung der in Bewegungsrichtung der Zwischenlage (5) verlaufenden Außenkante (6) vorzugsweise einen Laserstrahl emittiert.

4. Verfahren nach einem oder mehreren der Ansprüche 1 bis 3, bei welchem die Zwischenlage (5) nach Erreichen des Zielortes (Z1, Z2) gegriffen und in Richtung einer Palette gezogen wird und/oder bei welchem die Zwischenlage (5) beginnend mit der Abtrennung vom Zwischenlagenstapel (7) unterbrechungsfrei bis zum Zielort (Z1, Z2) bewegt wird.

5. Verfahren nach einem oder mehreren der Ansprüche 1 bis 4, bei welchem von wenigstens zwei separaten Zwischenlagenstapeln (7) jeweils eine einzelne zuoberst auf dem jeweiligen Zwischenlagenstapel (7) angeordnete Zwischenlage (5) abgetrennt wird, die von den wenigstens zwei separaten Zwischenlagenstapeln (7) abgetrennten einzelnen Zwischenlagen (5) in einen Erfassungsbereich einer jeweiligen Sensorik (13) bewegt werden, wobei die jeweilige Sensorik (13) eine in Bewegungsrichtung der jeweiligen Zwischenlage (5) verlaufende Außenkante mittels vorzugsweise optischer Erfassung erkennt und wobei zeitlich hierauf die abgetrennten einzelnen Zwischenlagen (5) einen jeweiligen Zielort (Z1, Z2) unter Berücksichtigung der jeweiligen vorzugsweise optischen Erfassung anfahren, so dass die Zwischenlagen (5) ihren jeweiligen Zielort (Z1, Z2) mit vorbestimmter Position erreichen.

6. Verfahren nach Anspruch 5, bei welchem zeitlich vor Abtrennen der einzelnen Zwischenlage (5) von den wenigstens zwei separaten Zwischenlagenstapeln (7) ihre jeweilige an die Außenkante (6) anschließende Vorderkante (8) und ihre jeweilige an die Außenkante (6) anschließende Rückkante (9) ausgerichtet werden, wobei vorzugsweise zum Ausrichten mindestens zwei zustellbare Anschläge (20, 22) gegen die Vorder- und Rückkanten (8, 9) mehrerer Zwischenlagen (5) der wenigstens zwei Zwischenlagenstapel (7) geführt werden, wobei ein zur vorderbündigen Ausrichtung von Zwischenlagen (5) vorgesehener Anschlag (22) und ein zur rückbündigen Ausrichtung von Zwischenlagen (5) vorgesehener Anschlag (20) sowohl mehrere Zwischenlagen (5) eines ersten Zwischenlagenstapels (7) als auch mehrere Zwischenlagen (5) eines zweiten Zwischenlagenstapels (7) bündig zueinander ausrichten.

7. Verfahren nach Anspruch 5 oder 6, bei welchem die zwei oder mehreren Zwischenlagen (5) nach Erreichen des jeweiligen Zielortes (Z1, Z2) zwischen ihren direkt benachbarten Außenkanten (6) einen vorbestimmten Abstand (14) ausbilden, welcher Abstand (14) entlang ihrer direkt benachbarten Außenkanten (6) durchgehend konstant ausgebildet ist.

8. Verfahren nach einem oder mehreren der Ansprüche 1 bis 7, bei welchem die einzelne Zwischenlage (5) mit bestimmtem Betrag einer Wegstrecke zur vorzugsweise optischen Erfassung ihrer in Bewegungsrichtung verlaufenden Außenkante (6) in Richtung einer ersten Sensorik (13) bewegt wird, zeitlich hierauf folgend das Erfassen ihrer in Bewegungsrichtung verlaufenden Außenkante (6) überprüft wird und für den Fall einer nicht erfolgten optischen Erfassung der Außenkante (6) die jeweilige einzelne Zwischenlage (5) in den Erfassungsbereich einer zweiten Sensorik (13b) bewegt wird, welche die in Bewegungsrichtung verlaufende Außenkante (6) der jeweiligen Zwischenlage (5) mittels vorzugsweise optischer Erfassung erkennt.

9. Verfahren nach Anspruch 8, bei welchem die Bewegung der einzelnen Zwischenlage (5) in Richtung der ersten Sensorik (13) mit einer Richtungskomponente (RK2) erfolgt und für den Fall einer nicht erfolgten optischen Erfassung der Außenkante die Bewegung in Richtung der zweiten Sensorik (13) mit einer weiteren Richtungskomponente erfolgt, wobei die Richtungskomponente (RK2) und die weitere Richtungskomponente entgegengesetzt zueinander orientiert sind.

10. Verfahren nach Anspruch 8 oder Anspruch 9, bei welchem die erste Sensorik (13) und/oder die zweite Sensorik (13) zur optischen Erfassung einen Laserstrahl emittieren.

11. Verfahren nach einem oder mehreren der Ansprüche 8 bis 10, bei welchem für den Fall einer vorzugsweise optischen Erfassung der Außenkante durch die zweite Sensorik (13) der Zielort (Z1, Z2) angefahren wird und zeitlich hierauf folgend mindestens eine weitere Zwischenlage (5) vom Zwischenlagenstapel (7) abgetrennt wird, welche mindestens eine weitere Zwischenlage (5) ohne Bewegung in Richtung der ersten Sensorik (13a) unmittelbar in den Erfassungsbereich der zweiten Sensorik (13b) bewegt wird.

12. Verfahren nach einem oder mehreren der Ansprüche 1 bis 11, bei welchem die jeweilige Zwischenlage (5) zeitlich nach Erkennen ihrer Außenkante (6) schräg zur Richtung des Zielortes (Z1, Z2) verfahren wird, bis ihre Ausrichtung mit ihrer für den Zielort (Z1, Z2) vorbestimmten Position fluchtet und wobei die jeweilige Zwischenlage (5) zeitlich hierauf folgend den Zielort (Z1, Z2) auf direktem Wege anfährt.

13. Vorrichtung (1) zum Umgang mit einzelnen Zwischenlagen (5) eines Zwischenlagenstapels (7) und vorbereitet zur Durchführung eines Verfahrens nach einem der Ansprüche 1 bis 12, umfassend
- mindestens eine verfahrbare Saug- und/oder Greifeinrichtung (3) zum Abtrennen einer einzelnen Zwischenlage (5) vom Zwischenlagenstapel (7) und Überführen der abgetrennten Zwischenlage (5) an einen Zielort (Z1, Z2),
- wenigstens eine Sensorik (13), über welche eine in Bewegungsrichtung der abgetrennten Zwischenlage (5) verlaufende Außenkante (6) mittels vorzugsweise optischer Erfassung erkennbar ist, sowie
- eine Steuerungseinrichtung (S), die mit der wenigstens einen Sensorik (13) und der Saug- und/oder Greifeinrichtung (3) in Verbindung steht, wobei von der Steuerungseinrichtung (S) eine Bewegungsrichtung der mindestens einen fahrenden Saug- und/oder Greifeinrichtung (3) unter Berücksichtigung der Erfassung derart vorgegeben werden kann, dass die Zwischenlage (5) den Zielort (Z1, Z2) mit vorbestimmter Position erreicht, die Vorrichtung (1) **gekennzeichnet durch** eine erste Sensorik (13) und eine zweite Sensorik (13), über welche jeweils eine in Bewegungsrichtung der abgetrennten Zwischenlage (5) verlaufende Außenkante (6) mittels vorzugsweise optischer Erfassung erkennbar ist, wobei die Steuerungseinrichtung (S) mit der ersten Sensorik (13) und der zweiten Sensorik (13) in Verbindung steht und wobei von der Steuerungseinrichtung (S) das jeweilige Erfassen der ersten Sensorik (13) überprüfbar ist, wobei die Steuerungseinrichtung (S) im Fall einer nicht erfolgten optischen Erfassung die mindestens eine Saug- und/oder Greifeinrichtung (3) zur Bewegung der abgetrennten Zwischenlage (5) in einen Erfassungsbereich der zweiten Sensorik (13) ansteuern kann.

14. Vorrichtung nach Anspruch 13, bei welcher die wenigstens eine Sensorik (13) eine Lichtschranke (15) oder mehrere Lichtschranken (15) umfasst, wobei die eine Lichtschranke (15) oder die mehreren Lichtschranken (15) vorzugsweise wenigstens einen als Laser ausgebildeten Sender umfassen.

15. Vorrichtung nach Anspruch 13 oder Anspruch 14, umfassend wenigstens zwei Anschläge (20, 22), die mittels einer durch die Steuerungseinrichtung (S) initiierten Zustellbewegung zur vorderbündigen Ausrichtung mit mehreren zuoberst auf dem Zwischenlagenstapel (7) angeordneten Zwischenlagen (5) in Kontakt gebracht werden können.

16. Vorrichtung nach einem der Ansprüche 13 bis 15, umfassend wenigstens zwei verfahrbare Saug- und/oder Greifeinrichtungen (3) zum jeweiligen Abtrennen einzelner Zwischenlagen (5) von einem jeweils zugeordneten Zwischenlagenstapel (7) und Überführen der abgetrennten Zwischenlage (5) an einen Zielort (Z1, Z2), welche wenigstens zwei verfahrbaren Saug- und/oder Greifeinrichtungen (3) mit der Steuerungseinrichtung (S) in Verbindung stehen, wobei ihre Bewegungsrichtungen unabhängig voneinander und unter Berücksichtigung einer jeweiligen Erfassung der Außenkante (6) ihrer abgetrennten Zwischenlage (5) über die Steuerungseinrichtung (S) derart vorgegeben werden kann, dass die abgetrennten Zwischenlagen (5) der wenigstens zwei Saug- und/oder Greifeinrichtungen (3) ihren Zielort (Z1, Z2) mit jeweils vorbestimmter Position erreichen und bei welcher die Steuerungseinrichtung (S) eine Bewegung der wenigstens zwei verfahrbaren Saug- und/oder Greifeinrichtungen (3) vorzugsweise derart steuern kann, dass die Zwischenlagen (5) ihren jeweiligen Zielort (Z1, Z2) zumindest näherungsweise zeitsynchron erreichen.

17. Vorrichtung zum Umgang mit einzelnen Zwischenlagen nach einem oder mehreren der Ansprüche 13 bis 16, bei welcher die erste Sensorik (13) und/oder die zweite Sensorik (13) jeweils wenigstens eine Lichtschranke (15) und vorzugsweise wenigstens einen als Laser ausgebildeten Sender umfassen.

## Claims

1. A method used to handle individual intermediate layers (5) of a stack (7) of intermediate layers, the method comprising the following steps:
- removing of an individual intermediate layer (5) from the stack (7) of intermediate layers,
- moving of the intermediate layer (5) into a detection range of a sensor system (13), which identifies an outer edge (6) extending in movement direction of the intermediate layer (5) preferably by means of optical detection,
- a move toward a target location (Z1, Z2) in consideration of the preferably optical detection such that the intermediate layer (5) reaches the target location (Z1, Z2) in a predetermined position, wherein the method is **characterised in that**
the removed intermediate layer (5) is moved into the detection range of the sensor system (13) time-synchronously with a first directional component (RK1), which faces toward the target location (Z1, Z2), and with a second directional component (RK2), which is oriented perpendicular to the first directional component (RK1).

2. The method according to claim 1, in which, temporally prior to the individual intermediate layer (5) being removed from the stack (7) of intermediate layers, the intermediate layer's (5) front edge (8) adjoining the outer edge (6) and the intermediate layer's (5) back edge (9) adjoining the outer edge (6) are aligned, wherein, preferably for the purpose of alignment, two advanceable stops (20, 22) are guided against the front edges and back edges (8, 9) of a plurality of intermediate layers (5) positioned topmost on the stack (7) of intermediate layers, such that the plurality of intermediate layers (5) positioned topmost on the stack (7) of intermediate layers are hereby aligned substantially flush with each other.

3. The method according to claim 1 or claim 2, in which the outer edge (6) extending in movement direction of the intermediate layer (5) is optically detected by means of a light barrier (15), which light barrier (15) preferably emits a laser beam for the optical detection of the outer edge (6) extending in movement direction of the intermediate layer (5).

4. The method according to one or more of the claims 1 to 3, in which the intermediate layer (5) is gripped and pulled toward a pallet after reaching the target location (Z1, Z2), and/or in which the intermediate layer (5) is moved interruption-free starting from the removal from the stack (7) of intermediate layers up to the target location (Z1, Z2).

5. The method according to one or more of the claims 1 to 4, in which in each instance one individual intermediate layer (5) arranged topmost on the particular stack (7) of intermediate layers is removed from at least two separate stacks (7) of intermediate layers, and the individual intermediate layers (5) removed from the at least two separate stacks (7) of intermediate layers are moved into a detection range of a particular sensor system (13), wherein the particular sensor system (13) identifies an outer edge extending in the movement direction of the particular intermediate layer (5) preferably by means of optical detection, and wherein the removed individual intermediate layers (5) temporally hereafter move toward a particular target location (Z1, Z2) in consideration of the particular, preferably optical detection such that the intermediate layers (5) reach their particular target location (Z1, Z2) in a predetermined position.

6. The method according to claim 5, in which, temporally prior to removing the individual intermediate layer (5) from the at least two separate stacks (7) of intermediate layers, the particular intermediate layer's (5) front edge (8) adjoining the outer edge (6) and the particular intermediate layer's (5) back edge (9) adjoining the outer edge (6) are aligned, wherein, preferably for the purpose of alignment, at least two advanceable stops (20, 22) are guided against the front edges and back edges (8, 9) of the plurality of intermediate layers (5) of the at least two stacks (7) of intermediate layers, wherein a stop (22) provided for the alignment of intermediate layers (5) flush in front and a stop (20) provided for the alignment of intermediate layers (5) flush in back align both a plurality of intermediate layers (5) of a first stack (7) of intermediate layers and a plurality of intermediate layers (5) of a second stack (7) of intermediate layers (7) flush with each other.

7. The method according to claim 5 or 6, in which the two or the plurality of intermediate layers (5) form a predetermined space (14) between their directly adjacent outer edges (6) after reaching the particular target location (Z1, Z2), which space (14) is formed in a continuously constant manner along the directly adjacent outer edges (6) of said intermediate layers (5).

8. The method according to one or more of the claims 1 to 7, in which the individual intermediate layer (5) is moved by a determined path distance value toward a first sensor system (13) for the purpose of the preferably optical detection of the intermediate layer's outer edge (6) extending in movement direction, with the detection of the intermediate layer's outer edge (6) extending in movement direction being verified temporally following hereafter, and, in the instance of a non-performed optical detection of the outer edge (6), with the particular individual intermediate layer (5) being moved into the detection range of a second sensor system (13b), which identifies the outer edge (6) extending in the movement direction of the particular intermediate layer (5) preferably by means of optical detection.

9. The method according to claim 8, in which the moving of the individual intermediate layer (5) toward the first sensor system (13) is performed with a directional component (RK2), and, in the instance of a non-performed optical detection of the outer edge, the moving toward the second sensor system (13) is performed with a further directional component, wherein the directional component (RK2) and the further directional component are oriented opposite to each other.

10. The method according to claim 8 or claim 9, in which the first sensor system (13) and/or the second sensor system (13) emit a laser beam for the purpose of the optical detection.

11. The method according to one or more of the claims 8 to 10, in which the target location (Z1, Z2) is moved toward to in the instance of a preferably optical detection of the outer edge by the second sensor system (13), and at least one further intermediate layer (5) is removed from the stack (7) of intermediate layers temporally following hereafter, which at least one further intermediate layer (5) is moved immediately into the detection range of the second sensor system (13b) without being moved toward the first sensor system (13a).

12. The method according to one or more of the claims 1 to 11, in which, temporally after the intermediate layer's (5) outer edge (6) having been identified, the particular intermediate layer (5) is moved diagonal to the direction of the target location (Z1, Z2) until the intermediate layer (5) is aligned with its predetermined position for the target location (Z1, Z2), and wherein the particular intermediate layer (5) is temporally following hereafter moved toward the target location (Z1, Z2) directly.

13. An apparatus (1) used to handle individual intermediate layers (5) of a stack (7) of intermediate layers and prepared to carry out a method according to one of the claims 1 to 12, the apparatus (1) comprising
- at least one movable suction device and/or gripping device (3) to remove an individual intermediate layer (5) from the stack (7) of intermediate layers and to transfer the removed intermediate layer (5) to a target location (Z1, Z2),
- at least one sensor system (13), by way of which an outer edge (6) extending in the movement direction of the removed intermediate layer (5) is identifiable by means of preferably optical detection, as well as comprising
- a control device (S), which is in communication with the at least one sensor system (13) and with the suction device and/or gripping device (3), wherein a movement direction of the at least one moving suction device and/or gripping device (3) can be specified by the control device (S) in consideration of the detection in such a manner that the intermediate layer (5) reaches the target location (Z1, Z2) in a predetermined position, the apparatus (1) being **characterised by** a first sensor system (13) and a second sensor system (13), by way of which in each instance an outer edge (6) extending in the movement direction of the removed intermediate layer (5) is identifiable by means of preferably optical detection, wherein the control device (S) is in communication with the first sensor system (13) and with the second sensor system (13), and wherein the particular detection of the first sensor system (13) is verifiable by the control device (S), wherein, in the instance of a non-performed optical detection, the control device (S) can control the at least one suction device and/or gripping device (3) to move the removed intermediate layer (5) into a detection range of the second sensor system (13).

14. The apparatus according to claim 13, in which the at least one sensor system (13) comprises a light barrier (15) or a plurality of light barriers (15), wherein the one light barrier (15) or the plurality of light barriers (15) preferably comprise at least one transmitter formed as a laser.

15. The apparatus according to claim 13 or claim 14, comprising at least two stops (20, 22), which can be brought into contact by way of an advance movement initiated by the control device (S) with a plurality of intermediate layers (5) arranged topmost on the stack (7) of intermediate layers for the purpose of a flush front alignment.

16. The apparatus according to one of the claims 13 to 15, comprising at least two movable suction devices and/or gripping devices (3) for the particular removal of individual intermediate layers (5) from a particularly assigned stack (7) of intermediate layers and for the transfer of the removed intermediate layer (5) to a target location (Z1, Z2), which at least two movable suction devices and/or gripping devices (3) are in communication with the control device (S), wherein the movement directions of the suction devices and/or gripping devices (3) can be specified by the control device (S) independently of one another and in consideration of a particular detection of the outer edge (6) of their particular removed intermediate layer (5) in such a manner that the removed intermediate layers (5) of the at least two suction devices and/or gripping devices (3) reach their target location (Z1, Z2) in the in each instance predetermined position, and in which the control device (S) can control a movement of the at least two movable suction devices and/or gripping devices (3) preferably in such a manner that the intermediate layers (5) reach their particular target location (Z1, Z2) at least approximately time-synchronously.

17. The apparatus used to handle individual intermediate layers according to one or more of the claims 13 to 16, in which apparatus the first sensor system (13) and/or the second sensor system (13) in each instance comprise at least one light barrier (15) and preferably at least one transmitter formed as a laser.

## Revendications

1. Procédé de manipulation de couches intermédiaires (5) individuelles d'une pile de couches intermédiaires (7), comprenant les étapes suivantes consistant à:
- séparer une couche intermédiaire (5) individuelle de la pile de couches intermédiaires (7),
- déplacer la couche intermédiaire (5) dans une zone de détection d'un ensemble de capteurs (13) qui détecte un bord extérieur (6) s'étendant dans la direction de déplacement de la couche intermédiaire (5) au moyen d'une détection de préférence optique,
- se diriger vers un lieu de destination (Z1, Z2) en prenant en considération la détection de préférence optique de sorte que la couche intermédiaire (5) atteint ledit lieu de destination (Z1, Z2) à position prédéterminée, le procédé étant
**caractérisé par le fait que**
la couche intermédiaire (5) séparée est déplacée dans la zone de détection de l'ensemble de capteurs (13) en synchronisme temporel avec une première composante de direction (RK1) qui montre en direction du lieu de destination (Z1, Z2) et avec une deuxième composante de direction (RK2) qui est orientée perpendiculairement à la première composante de direction (RK1).

2. Procédé selon la revendication 1, dans lequel, avant de séparer la couche intermédiaire (5) individuelle de la pile de couches intermédiaires (7), son bord avant (8) contigu au bord extérieur (6) et son bord arrière (9) contigu au bord extérieur (6) sont alignés, dans lequel, de préférence pour aligner, deux butées (20, 22) aptes à être rapprochées sont guidées contre les bords avant et arrière (8, 9) d'une pluralité de couches intermédiaires (5) se trouvant tout en haut sur la pile de couches intermédiaires (7), de sorte que, grâce à cela, lesdites plusieurs couches intermédiaires (5) se trouvant tout en haut sur la pile de couches intermédiaires (7) sont alignées de manière à être pour l'essentiel à fleur les unes par rapport aux autres.

3. Procédé selon la revendication 1 ou la revendication 2, dans lequel le bord extérieur (6) s'étendant dans la direction de déplacement de la couche intermédiaire (5) est détecté optiquement au moyen d'un barrage photoélectrique (15), lequel barrage photoélectrique (15) émet de préférence un faisceau laser pour détecter de façon optique le bord extérieur (6) s'étendant dans la direction de déplacement de la couche intermédiaire (5).

4. Procédé selon l'une ou plusieurs des revendications 1 à 3, dans lequel, après que la couche intermédiaire (5) a atteint le lieu de destination (Z1, Z2), elle est saisie et tirée en direction d'une palette, et/ou, à partir de la séparation de la pile de couches intermédiaires (7), la couche intermédiaire (5) est déplacée sans interruption jusqu'au lieu de destination (Z1, Z2).

5. Procédé selon l'une ou plusieurs des revendications 1 à 4, dans lequel, dans au moins deux piles de couches intermédiaires (7) séparées, respectivement une couche intermédiaire (5) individuelle disposée tout en haut sur la pile de couches intermédiaires (7) respective en est séparée, les couches intermédiaires (5) individuelles séparées desdites au moins deux piles de couches intermédiaires (7) séparées sont déplacées dans une zone de détection d'un ensemble de capteurs (13) respectif, dans lequel l'ensemble de capteurs (13) respectif détecte au moyen de détection de préférence optique un bord extérieur (6) s'étendant dans la direction de déplacement de la couche intermédiaire (5) respective, et dans lequel, ensuite, les couches intermédiaires (5) individuelles séparées se dirigent vers un lieu de destination (Z1, Z2) respectif en prenant en considération la détection respective de préférence optique de sorte que les couches intermédiaires (5) atteignent leur lieu de destination (Z1, Z2) respectif à position prédéterminée.

6. Procédé selon la revendication 5, dans lequel, avant de séparer la couche intermédiaire (5) individuelle desdites au moins deux piles de couches intermédiaires (7) séparées, son bord avant (8) respectif contigu au bord extérieur (6) et son bord arrière (9) respectif contigu au bord extérieur (6) sont alignés, dans lequel, de préférence pour aligner, au moins deux butées (20, 22) aptes à être rapprochées sont guidées contre les bords avant et arrière (8, 9) d'une pluralité de couches intermédiaires (5) desdites au moins deux piles de couches intermédiaires (7), dans lequel une butée (22) prévue pour aligner des couches intermédiaires (5) de manière à être à fleur à l'avant et une butée (20) prévue pour aligner des couches intermédiaires (5) de manière à être à fleur à l'arrière alignent aussi bien une pluralité de couches intermédiaires (5) d'une première pile de couches intermédiaires (7) qu'une pluralité de couches intermédiaires (5) d'une deuxième pile de couches intermédiaires (7) de manière à ce qu'elles soient à fleur les unes par rapport aux autres.

7. Procédé selon la revendication 5 ou 6, dans lequel, après avoir atteint le lieu de destination (Z1, Z2) respectif, les deux ou plusieurs couches intermédiaires (5) forment une distance (14) prédéterminée entre leurs bords extérieurs (6) directement adjacents, laquelle distance (14) est continuellement constante le long de leurs bords extérieurs (6) directement adjacents.

8. Procédé selon l'une ou plusieurs des revendications 1 à 7, dans lequel la couche intermédiaire (5) individuelle est déplacée en direction d'un premier ensemble de capteurs (13) avec une certaine valeur d'une distance pour une détection de préférence optique de son bord extérieur (6) s'étendant dans la direction de déplacement, puis la détection de son bord extérieur (6) s'étendant dans la direction de déplacement est vérifiée et, dans le cas où le bord extérieur (6) n'est pas détecté optiquement, la couche intermédiaire (5) individuelle respective est déplacée dans la zone de détection d'un deuxième ensemble de capteurs (13b) qui détecte au moyen d'une détection de préférence optique le bord extérieur (6) de la couche intermédiaire (5) respective, qui s'étend dans la direction de déplacement.

9. Procédé selon la revendication 8, dans lequel le déplacement de la couche intermédiaire (5) individuelle en direction du premier ensemble de capteurs (13) s'effectue avec une composante directionnelle (RK2) et, dans le cas où le bord extérieur n'est pas détecté optiquement, le déplacement en direction du deuxième système de capteurs (13) s'effectue avec une autre composante directionnelle, dans lequel la composante directionnelle (RK2) et l'autre composante directionnelle sont orientées de manière à être opposées l'une à l'autre.

10. Procédé selon la revendication 8 ou la revendication 9, dans lequel le premier ensemble de capteurs (13) et/ou le deuxième ensemble de capteurs (13) émettent un faisceau laser pour la détection optique.

11. Procédé selon l'une ou plusieurs des revendications 8 à 10, dans lequel, dans le cas où le bord extérieur est détecté de préférence de façon optique par le deuxième ensemble de capteurs (13), on approche du lieu de destination (Z1, Z2) et, ensuite, au moins une autre couche intermédiaire (5) est séparée de la pile de couches intermédiaires (7), laquelle au moins une autre couche intermédiaire (5) est déplacée, sans mouvement en direction du premier ensemble de capteurs (13a), directement dans la zone de détection du deuxième ensemble de capteurs (13b).

12. Procédé selon l'une ou plusieurs des revendications 1 à 11, dans lequel la couche intermédiaire (5) respective est déplacée obliquement par rapport à la direction du lieu de destination (Z1, Z2) après que son bord extérieur (6) a été détecté, jusqu'à ce que son orientation soit alignée sur sa position prédéterminée pour le lieu de destination (Z1, Z2), et, puis, dans lequel la couche intermédiaire (5) respective s'approche directement du lieu de destination (Z1, Z2).

13. Dispositif (1) de manipulation de couches intermédiaires (5) individuelles d'une pile de couches intermédiaires (7) et préparé pour la mise en oeuvre d'un procédé selon l'une quelconque des revendications 1 à 12, comprenant:
- au moins un dispositif d'aspiration et/ou de préhension (3) déplaçable qui est destiné à séparer une couche intermédiaire (5) individuelle de la pile de couches intermédiaires (7) et à transférer la couche intermédiaire (5) séparée vers un lieu de destination (Z1, Z2),
- au moins un ensemble de capteurs (13) par le biais duquel peut être détecté, au moyen de détection de préférence optique, un bord extérieur (6) s'étendant dans la direction de déplacement de la couche intermédiaire (5) séparée, ainsi qu'
- un dispositif de commande (S) qui est en communication avec ledit au moins un ensemble de capteurs (13) et ledit dispositif d'aspiration et/ou de préhension (3), dans lequel le dispositif de commande (S) peut prédéterminer une direction de déplacement dudit au moins un dispositif d'aspiration et/ou de préhension (3) mobile, en tenant compte de la détection, de telle sorte que la couche intermédiaire (5) atteigne le lieu de destination (Z1, Z2) avec une position prédéterminée, le dispositif (1) étant **caractérisé par** un premier ensemble de capteurs (13) et un deuxième ensemble de capteurs (13) par le biais desquels un bord extérieur (6) s'étendant dans la direction de déplacement de la couche intermédiaire (5) séparée peut être détecté au moyen d'une détection de préférence optique, dans lequel ledit dispositif de commande (S) est en communication avec le premier ensemble de capteurs (13) et le deuxième ensemble de capteurs (13), et dans lequel la détection respective du premier ensemble de capteurs (13) peut être vérifiée par le dispositif de commande (S), dans lequel, dans le cas où une détection optique n'a pas eu lieu, le dispositif de commande (S) peut commander ledit au moins un dispositif d'aspiration et/ou de préhension (3) pour déplacer la couche intermédiaire (5) séparée dans une zone de détection du deuxième ensemble de capteurs (13).

14. Dispositif selon la revendication 13, dans lequel ledit au moins un ensemble de capteurs (13) comprend un barrage photoélectrique (15) ou plusieurs barrages photoélectriques (15), dans lequel ledit un barrage photoélectrique (15) ou lesdits plusieurs barrages photoélectriques (15) comprennent de préférence au moins un émetteur réalisé en tant que laser.

15. Dispositif selon la revendication 13 ou la revendication 14, comprenant au moins deux butées (20, 22) qui peuvent être mises en contact avec une pluralité de couches intermédiaires (5) disposées tout en haut sur la pile de couches intermédiaires (7), au moyen d'un mouvement de rapprochement initié par le dispositif de commande (S), pour un alignement affleurant à l'avant.

16. Dispositif selon l'une quelconque des revendications 13 à 15, comprenant au moins deux dispositifs d'aspiration et/ou de préhension (3) déplaçables pour séparer respectivement des couches intermédiaires (5) individuelles d'une pile de couches intermédiaires (7) respectivement associée et pour transférer la couche intermédiaire (5) séparée vers un lieu de destination (Z1, Z2), lesquels au moins deux dispositifs d'aspiration et/ou de préhension (3) déplaçables sont en communication avec le dispositif de commande (S), dans lequel leurs directions de déplacement peuvent être prédéterminées par le dispositif de commande (S) de manière indépendante les unes des autres et en tenant compte d'une détection respective du bord extérieur (6) de leur couche intermédiaire (5) séparée, de telle sorte que les couches intermédiaires (5) séparées desdits au moins deux dispositifs d'aspiration et/ou de préhension (3) atteignent leur lieu de destination (Z1, Z2) avec une position respectivement prédéterminée, et dans lequel le dispositif de commande (S) peut commander un déplacement desdits au moins deux dispositifs d'aspiration et/ou de préhension (3) déplaçables de préférence de telle manière que les couches intermédiaires (5) atteignent leur lieu de destination (Z1, Z2) respectif au moins approximativement en synchronisme temporel.

17. Dispositif de manipulation de couches intermédiaires individuelles selon l'une ou plusieurs des revendications 13 à 16, dans lequel le premier ensemble de capteurs (13) et/ou le deuxième ensemble de capteurs (13) comprennent chacun au moins un barrage photoélectrique (15) et de préférence au moins un émetteur conçu en tant que laser.
